# EUROPEAN PATENT APPLICATION

(11) **EP 4 746 472 A1**
(43) Date of publication of application: **20.05.2026**
(21) Application number: 24850806.1
(22) Date of filing: 25.07.2024
(51) Int. Cl.: H04W 12/033, H04L 9/40

(54) **COMMUNICATION METHOD AND COMMUNICATION APPARATUS**

(30) Priority: 04.08.2023 CN 202310985716
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN); HENDA, Noamen Ben, Shenzhen, Guangdong 518129 (CN)
(74) Representative: Pfenning, Meinig & Partner mbB
(86) International application number: PCT/CN2024/107466
(87) International publication number: WO 2025/031157

(57) **Abstract**

This application provides a communication method, including: A network device determines a security algorithm, where the security algorithm includes a part for confidentiality protection and a part for integrity protection. The network device activates security protection between the network device and a terminal device based on the security algorithm and a security key, where the security key is a key shared between the terminal device and the network device. The network device receives a security-protected uplink message from the terminal device, performs integrity verification on the uplink message by using the security key as an input key of the part for integrity protection in the security algorithm, and decrypts the uplink message by using the security key as an input key of the part for confidentiality protection in the security algorithm. The security algorithm can implement both confidentiality protection and integrity protection. In this case, the network device may perform integrity check and decryption based on a same security key, thereby avoiding a security risk in a combination of a confidentiality security protection algorithm and an integrity security protection algorithm.

## Description

This application claims priority to Chinese Patent Application No. 202310985716.0, filed with the China National Intellectual Property Administration on August 4, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

When a network device starts a non-access stratum (non-access stratum, NAS) security mode control procedure (security mode control procedure, SMC) or an access stratum (access stratum, AS) security mode control procedure, after a network side sends a security mode command (security mode command, SMC) message to a terminal side, a terminal device responds to the SMC message and returns a security mode complete (security mode complete, SMP) message to the network side.

The terminal device and the network side may negotiate a security protection algorithm based on an SMC procedure, to protect a message transmitted between the terminal device and the network side. For example, the terminal device and the network side may negotiate, based on the SMC procedure, an algorithm required for confidentiality security protection and integrity security protection. When confidentiality security protection and integrity security protection need to be performed on a to-be-transmitted message, how to avoid a security risk in a combination of a confidentiality security protection algorithm and an integrity security protection algorithm becomes an urgent problem to be resolved.

### SUMMARY

This application provides a communication method, to avoid a security risk in a combination of a confidentiality security protection algorithm and an integrity security protection algorithm.

According to a first aspect, a communication method is provided. The method may be performed by a network device, or may be performed by a component (for example, a chip or a circuit) of the network device. This is not limited in this application.

The communication method includes: determining a security algorithm, where the security algorithm includes a part for confidentiality protection and a part for integrity protection; activating security protection between the network device and a terminal device based on the security algorithm and a security key, where the security key is a key shared between the terminal device and the network device; and receiving a security-protected uplink message from the terminal device, performing integrity verification on the security-protected uplink message by using the security key as an input key of the part for integrity protection in the security algorithm, and decrypting the security-protected uplink message by using the security key as an input key of the part for confidentiality protection in the security algorithm.

That the network device performs integrity verification on the uplink message by using the security key as the input key of the part for integrity protection in the security algorithm includes: The network device performs integrity verification on the uplink message by using some or all information elements carried in the uplink message and using the security key as the input key of the part for integrity protection in the security algorithm. In addition, that the network device decrypts the security-protected uplink message by using the security key as the input key of the part for confidentiality protection in the security algorithm includes: The network device decrypts, by using the security key as the input key of the part for confidentiality protection in the security algorithm, some or all information elements carried in the security-protected uplink message.

Based on the foregoing solution, the security algorithm determined by the network device can implement both confidentiality protection and integrity protection. In this case, the network device may perform integrity check and decryption on the uplink message based on a same security key and the security algorithm, thereby avoiding a security risk in a combination of a confidentiality security protection algorithm and an integrity security protection algorithm. For example, performing, by using the confidentiality security protection algorithm and the integrity security protection algorithm, security protection on a message transmitted between the terminal device and the network device (for example, an AMF or an access network device) specifically includes: first performing integrity security protection on the message based on the integrity security protection algorithm, and then performing confidentiality security protection on the message by using an integrity security protection result as an input parameter of the confidentiality security protection algorithm. When the integrity security protection result is used as the input parameter of confidentiality security protection, there may be algorithm splicing, which poses a security risk.

In addition, in the foregoing solution, both confidentiality protection and integrity protection can be implemented based on a same security key, and using a same security key can also reduce key derivation complexity and save key storage space.

With reference to the first aspect, in some implementations of the first aspect, after activating security protection between the network device and the terminal device based on the security algorithm and the security key, the method further includes: performing security protection on a to-be-sent security mode command message based on the security algorithm, where the to-be-sent security mode command message includes a first parameter and a second parameter; and sending a security-protected security mode command message to the terminal device, where the security-protected security mode command message includes first ciphertext, first message authentication code MAC, and the first parameter, where the first ciphertext is obtained by performing confidentiality protection on the second parameter based on the security algorithm, and the first MAC is obtained by performing integrity protection calculation on the first parameter and the first ciphertext based on the security algorithm.

Based on the foregoing solution, the security-protected security mode command message sent by the network device carries the first ciphertext obtained by performing confidentiality protection on the second parameter based on the security algorithm, and the first MAC obtained by performing integrity protection calculation on the first parameter and the first ciphertext based on the security algorithm. In addition, the security algorithm further includes the first parameter required by the terminal device to perform security check. The network device uses the security algorithm to perform confidentiality and integrity security protection on a security mode command message, so that some parameters can be transmitted through the security mode command message in a case of confidentiality protection, thereby improving security. In addition, the security mode command message further carries a first parameter in a plaintext form, so that the security mode command message can undergo security check based on the first parameter after being received.

With reference to the first aspect, in some implementations of the first aspect, the first parameter includes at least one of the following: an identifier of the security algorithm, replayed terminal device security capability information, a key identifier of a first key, or change indication information of the first key, where the first key is used to determine the security key.

Based on the foregoing solution, the first parameter carried in the security-protected security mode command message may be the identifier of the security algorithm, the replayed terminal device security capability information, the change indication information of the first key, the key identifier of the first key, or the like. In this way, the terminal device implements security check based on the first parameter in a plurality of manners. For example, the terminal device may verify, based on the replayed terminal device security capability information, whether the security mode command message is tampered with. For another example, the terminal device may determine a key of the security algorithm based on the key identifier of the first key, and perform integrity check, so that message transmission security can be further improved.

With reference to the first aspect, in some implementations of the first aspect, the security-protected security mode command message further includes first indication information, and the first indication information indicates a length of the first parameter and/or indicates a location of the first parameter in the security-protected security mode command message.

Based on the foregoing solution, the security mode command message may further carry the first indication information, to indicate the specific location and/or length of the first parameter, so that the terminal device can quickly and accurately read the first parameter from the security-protected security mode command message based on the first indication information, thereby reducing a processing delay.

With reference to the first aspect, in some implementations of the first aspect, the security-protected security mode command message includes a first packet header type indication, and the first packet header type indication indicates that security protection is performed on the security-protected security mode command message based on the security algorithm.

With reference to the first aspect, in some implementations of the first aspect, after activating security protection between the network device and the terminal device based on the security algorithm and the security key, the method further includes: performing integrity protection on a to-be-sent security mode command message by using the security key as an input key of the part for integrity protection; and sending an integrity-protected security mode command message to the terminal device.

Based on the foregoing solution, the network device may perform integrity security protection on the to-be-transmitted security mode command message based on the part for integrity protection in the security algorithm. There is no need to select an integrity security protection algorithm and there is no need to transmit an identifier of the integrity security protection algorithm to the terminal device, and the terminal device may perform integrity security check based on the part for integrity protection in the security algorithm. This can reduce signaling overheads.

With reference to the first aspect, in some implementations of the first aspect, after determining the security algorithm, the method further includes: determining a first integrity security protection algorithm based on the security algorithm; performing integrity protection on a to-be-sent security mode command message based on the first integrity security protection algorithm; and sending an integrity-protected security mode command message to the terminal device.

Based on the foregoing solution, the network device may further determine, based on the determined security algorithm, the first integrity security protection algorithm required for integrity protection of the security mode command message. In this technical solution, the security mode command message sent by the network device does not need to carry an identifier of the first integrity security protection algorithm. This is because the terminal device may also determine the first integrity security protection algorithm based on the security algorithm and perform integrity check. This can reduce signaling overheads.

With reference to the first aspect, in some implementations of the first aspect, after performing integrity protection on the to-be-sent security mode command message based on the first integrity security protection algorithm, the method further includes: deleting the first integrity security protection algorithm from a security context.

Based on the foregoing solution, after performing integrity protection on the to-be-sent security mode command message based on the first integrity security protection algorithm, the network device may delete the first integrity security protection algorithm from the security context. This is because security protection may be performed on a subsequently transmitted message based on the determined security algorithm, and security protection does not need to be performed based on the first integrity security protection algorithm. Compared with a solution in which all determined security protection algorithms are stored as security contexts, this can reduce storage overheads.

With reference to the first aspect, in some implementations of the first aspect, performing integrity protection on the to-be-sent security mode command message based on the first integrity security protection algorithm includes: performing integrity protection on the to-be-sent security mode command message by using the security key as an input key of the first integrity security protection algorithm.

Based on the foregoing solution, in a process in which the network device performs integrity protection on the to-be-sent security mode command message based on the first integrity security protection algorithm, the network device may perform integrity protection on the to-be-sent security mode command message based on the foregoing security key, and does not need to additionally determine a key. This reduces processing complexity.

With reference to the first aspect, in some implementations of the first aspect, determining the first integrity security protection algorithm based on the security algorithm includes: determining, as the first integrity security protection algorithm, an algorithm obtained by setting the part for confidentiality protection in the security algorithm to null; or determining the first integrity security protection algorithm based on the security algorithm and a correspondence between the security algorithm and the first integrity security protection algorithm.

Based on the foregoing solution, the network device may determine the first integrity security protection algorithm based on the security algorithm in different manners, including but not limited to: directly determining, as the first integrity security protection algorithm, an algorithm obtained by setting the part for confidentiality protection in the selected security algorithm to null; or determining the first integrity security protection algorithm based on a locally stored correspondence (that is, the correspondence between the security algorithm and the first integrity security protection algorithm) and the selected security algorithm. This improves solution flexibility.

With reference to the first aspect, in some implementations of the first aspect, if the security algorithm is an SNOW-AEAD algorithm, the first integrity security protection algorithm is an SNOW integrity security protection algorithm; or if the security algorithm is a ZUC-AEAD algorithm, the first integrity security protection algorithm is a ZUC integrity security protection algorithm; or if the security algorithm is an AES-AEAD algorithm, the first integrity security protection algorithm is an AES integrity security protection algorithm.

With reference to the first aspect, in some implementations of the first aspect, the method further includes: determining a second integrity security protection algorithm, and performing integrity protection on a to-be-sent security mode command message based on the second integrity security protection algorithm; and sending an integrity-protected security mode command message to the terminal device, where the integrity-protected security mode command message includes an identifier of the security algorithm and an identifier of the second integrity security protection algorithm.

Based on the foregoing solution, the network device may determine the second integrity security protection algorithm, where the second integrity security protection algorithm is used to perform integrity security protection on the to-be-transmitted security mode command message, and the security algorithm is used to implement confidentiality and integrity security protection on a message transmitted after the security mode command message. Specifically, in the technical solution, the security algorithm is used to perform security protection on the message subsequently transmitted between the network device and the terminal device after the security mode command message, thereby avoiding a security risk in a combination of a confidentiality security protection algorithm and an integrity security protection algorithm.

With reference to the first aspect, in some implementations of the first aspect, after performing integrity protection on the to-be-sent security mode command message based on the second integrity security protection algorithm, the method further includes: deleting the second integrity security protection algorithm from a security context.

Based on the foregoing solution, after performing integrity protection on the to-be-sent security mode command message based on the second integrity security protection algorithm, the network device may delete the second integrity security protection algorithm from the security context. This is because security protection may be performed on a subsequently transmitted message based on the determined security algorithm, and security protection does not need to be performed based on the second integrity security protection algorithm. Compared with a solution in which all determined security protection algorithms are stored as security contexts, this can reduce storage overheads.

With reference to the first aspect, in some implementations of the first aspect, the method further includes: determining a third integrity security protection algorithm, and performing security protection on a to-be-sent security mode command message based on the third integrity security protection algorithm; and sending an integrity-protected security mode command message to the terminal device, where the integrity-protected security mode command message includes an identifier of the third integrity security protection algorithm and second indication information, and the second indication information indicates that security protection is performed, based on the security algorithm, on a message transmitted after the security mode command message.

With reference to the first aspect, in some implementations of the first aspect, the identifier of the third integrity security protection algorithm is used to determine the security algorithm.

With reference to the first aspect, in some implementations of the first aspect, the method further includes: determining the security algorithm based on the third integrity security protection algorithm and a correspondence between the third integrity security protection algorithm and the security algorithm.

Based on the foregoing solution, the network device determines the third integrity security protection algorithm, activates the third integrity security protection algorithm, and performs integrity security protection on the to-be-transmitted security mode command message based on the third integrity security protection algorithm. Further, the network device includes the second indication information in the security mode command message, where the second indication information indicates that confidentiality and integrity security protection are performed, based on the security algorithm, on the message transmitted after the security mode command message.

Specifically, the third integrity security protection algorithm can determine the security algorithm, so that the network device and the terminal device can negotiate, by using the identifier of the third integrity security protection algorithm that is carried in the security mode command message, a security protection manner of the message transmitted after the security mode command message. In this technical solution, the security algorithm is used to perform security protection on the message subsequently transmitted between the network device and the terminal device, thereby avoiding a security risk in a combination of a confidentiality security protection algorithm and an integrity security protection algorithm.

With reference to the first aspect, in some implementations of the first aspect, after performing integrity protection on the to-be-sent security mode command message based on the first integrity security protection algorithm, the method further includes: deleting the third integrity security protection algorithm from a security context.

Based on the foregoing solution, after performing integrity protection on the to-be-sent security mode command message based on the third integrity security protection algorithm, the network device may delete the third integrity security protection algorithm from the security context. This is because security protection may be performed on a subsequently transmitted message based on the determined security algorithm, and security protection does not need to be performed based on the third integrity security protection algorithm. Compared with a solution in which all determined security protection algorithms are stored as security contexts, this can reduce storage overheads.

With reference to the first aspect, in some implementations of the first aspect, determining the security algorithm includes: selecting the security algorithm based on a priority of at least one security algorithm, where the security algorithm is one of the at least one security algorithm.

Based on the foregoing solution, in a process in which the network device selects a security algorithm, if there are a plurality of security algorithms locally stored in the network device, a security algorithm with a higher priority may be selected as the foregoing security algorithm in consideration of priorities of different security algorithms.

With reference to the first aspect, in some implementations of the first aspect, the security algorithm is an authenticated encryption with associated data AEAD algorithm.

With reference to the first aspect, in some implementations of the first aspect, the security-protected uplink message includes a security mode response message.

Based on the foregoing solution, the network device receives a security mode response message (for example, a security mode complete message) from the terminal device. The security mode response message is confidentiality and integrity security-protected based on the security algorithm, and confidentiality and integrity security protection are implemented on the security mode response message based on a single security algorithm, thereby avoiding a security risk in a combination of a confidentiality security protection algorithm and an integrity security protection algorithm.

With reference to the first aspect, in some implementations of the first aspect, a header the security-protected uplink message includes a second packet header type indication, and the second packet header type indication indicates that security protection is performed on the security-protected uplink message based on the security algorithm.

With reference to the first aspect, in some implementations of the first aspect, the security mode command message (for example, the security-protected security mode command message or the integrity-protected security mode command message) sent by the network device to the terminal device indicates to activate security protection between the terminal device and the network device.

According to a second aspect, a communication method is provided. The method may be performed by a terminal device, or may be performed by a component (for example, a chip or a circuit) of the terminal device. This is not limited in this application.

The communication method includes: determining a security algorithm, where the security algorithm includes a part for confidentiality protection and a part for integrity protection; activating security protection between the terminal device and a network device based on the security algorithm and a security key, where the security key is a key shared between the terminal device and the network device; and performing security protection on a to-be-sent uplink message based on the security algorithm and the security key, and sending a security-protected uplink message to the network device, where performing security protection on the to-be-sent uplink message based on the security algorithm and the security key includes:
performing integrity protection on the to-be-sent uplink message by using the security key as an input key of the part for integrity protection in the security algorithm, and performing confidentiality protection on the to-be-sent uplink message by using the security key as an input key of the part for confidentiality protection in the security algorithm.

With reference to the second aspect, in some implementations of the second aspect, a security-protected security mode command message is received from the network device, where the security-protected security mode command message indicates the terminal device to activate security protection between the terminal device and the network device, and the security-protected security mode command message includes first ciphertext, first message authentication code MAC, and a first parameter; the security algorithm and the security key are determined based on the first parameter; the security key is used as the input key of the part for integrity protection in the security algorithm, calculation is performed by using the first ciphertext and the first parameter as input parameters of the part for integrity protection in the security algorithm, to obtain MAC, and integrity verification is performed on the security-protected security mode command message based on the first MAC and the MAC obtained through the calculation; and if the integrity verification succeeds, the first ciphertext is decrypted by using the security key as the input key of the part for confidentiality protection in the security algorithm, to obtain a second parameter.

With reference to the second aspect, in some implementations of the second aspect, the first parameter includes at least one of the following: an identifier of the security algorithm, replayed terminal device security capability information, a key identifier of a first key, or change indication information of the first key, where the first key is used to determine the security key.

With reference to the second aspect, in some implementations of the second aspect, the security-protected security mode command message further includes first indication information, and the first indication information indicates a length of the first parameter and/or indicates a location of the first parameter in the security-protected security mode command message. The method further includes: determining the first parameter based on the first indication information.

With reference to the second aspect, in some implementations of the second aspect, the security-protected security mode command message includes a first packet header type indication, and the first packet header type indication indicates that security protection is performed on the security-protected security mode command message based on the security algorithm.

With reference to the second aspect, in some implementations of the second aspect, determining the security algorithm includes: receiving an integrity-protected security mode command message from the network device; and determining the security algorithm based on the identifier of the security algorithm; and

The method further includes: performing integrity verification on the integrity-protected security mode command message by using the security key as the input key of the part for integrity protection in the security algorithm.

With reference to the second aspect, in some implementations of the second aspect, determining the security algorithm includes: receiving an integrity-protected security mode command message from the network device; and determining the security algorithm based on the identifier of the security algorithm; and

The method further includes: determining a first integrity security protection algorithm based on the security algorithm; and performing integrity verification on the integrity-protected security mode command message based on the first integrity security protection algorithm.

With reference to the second aspect, in some implementations of the second aspect, after the integrity verification succeeds, the method further includes: deleting the first integrity security protection algorithm from a security context.

With reference to the second aspect, in some implementations of the second aspect, performing integrity verification on the integrity-protected security mode command message based on the first integrity security protection algorithm includes: performing integrity verification on the integrity-protected security mode command message by using the security key as an input key of the first integrity security protection algorithm.

With reference to the second aspect, in some implementations of the second aspect, determining the first integrity security protection algorithm based on the security algorithm includes: determining, as the first integrity security protection algorithm, an algorithm obtained by setting the part for confidentiality protection in the security algorithm to null; or determining the first integrity security protection algorithm based on the security algorithm and a correspondence between the security algorithm and the first integrity security protection algorithm.

With reference to the second aspect, in some implementations of the second aspect, if the security algorithm is an SNOW-AEAD algorithm, the first integrity security protection algorithm is an SNOW integrity security protection algorithm; or if the security algorithm is a ZUC-AEAD algorithm, the first integrity security protection algorithm is a ZUC integrity security protection algorithm; or if the security algorithm is an AES-AEAD algorithm, the first integrity security protection algorithm is an AES integrity security protection algorithm.

With reference to the second aspect, in some implementations of the second aspect, determining the security algorithm includes: receiving an integrity-protected security mode command message from the network device, where the integrity-protected security mode command message includes an identifier of the security algorithm and an identifier of a second integrity security protection algorithm; and performing integrity verification on the integrity-protected security mode command message based on the second integrity security protection algorithm, and determining the security algorithm based on the identifier of the security algorithm.

With reference to the second aspect, in some implementations of the second aspect, after the integrity verification succeeds, the method further includes: deleting the second integrity security protection algorithm from a security context.

With reference to the second aspect, in some implementations of the second aspect, determining the security algorithm includes: receiving an integrity-protected security mode command message from the network device, where the integrity-protected security mode command message includes an identifier of a third integrity security protection algorithm and second indication information, and the second indication information indicates that security protection is performed, based on the security algorithm, on a message transmitted after the security mode command message; and performing integrity verification on the integrity-protected security mode command message based on the third integrity security protection algorithm, and determining the security algorithm based on the third integrity security protection algorithm.

With reference to the second aspect, in some implementations of the second aspect, after the integrity verification succeeds, and the security algorithm is determined based on the third integrity security protection algorithm, the method further includes: deleting the third integrity security protection algorithm from a security context.

With reference to the second aspect, in some implementations of the second aspect, the security algorithm is an authenticated encryption with associated data AEAD algorithm.

With reference to the second aspect, in some implementations of the second aspect, the security-protected uplink message includes a security mode response message.

For technical effects of the method shown in the second aspect and the possible designs of the second aspect, refer to the technical effects in the first aspect and the possible designs of the first aspect.

According to a third aspect, a communication apparatus is provided, configured to implement the method according to the first aspect. The apparatus includes a transceiver unit and a processing unit. The transceiver unit is configured to receive and send information, and the processing unit is configured to perform an internal processing action.

According to a fourth aspect, a communication apparatus is provided, configured to implement the method according to the second aspect. The apparatus includes a transceiver unit and a processing unit. The transceiver unit is configured to receive and send information, and the processing unit is configured to perform an internal processing action.

According to a fifth aspect, a communication system is provided, including a network device and a terminal device. The network device is configured to perform the method according to the first aspect, and the terminal device performs the method according to the second aspect.

According to a sixth aspect, a communication apparatus is provided. The apparatus includes: a memory, configured to store a program; and a processor, configured to execute the program stored in the memory. When the program stored in the memory is executed, the processor is configured to perform the methods provided in the foregoing aspects.

According to a seventh aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving a request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in embodiments of this application.

According to an eighth aspect, a computer-readable storage medium is provided. The computer-readable storage medium stores program code executed by a device, and the program code is used to perform the methods provided in the foregoing aspects.

According to a ninth aspect, a computer program product including instructions is provided. When the computer program product runs on a computer, the computer is enabled to perform the methods provided in the foregoing aspects.

According to a tenth aspect, a chip is provided. The chip includes a processor and a communication interface, and the processor reads, through the communication interface, instructions stored in a memory, to perform the methods provided in the foregoing aspects.

Optionally, in an implementation, the chip may further include the memory. The memory stores the instructions. The processor is configured to execute the instructions stored in the memory. When the instructions are executed, the processor is configured to perform the methods provided in the foregoing aspects.

### BRIEF DESCRIPTION OF DRAWINGS

FIG. 1 is a diagram of a network architecture 100;
(a) and (b) in FIG. 2 are a schematic diagram of a manner of using an authentication encryption algorithm;
FIG. 3 is a schematic flowchart of a NAS SMC procedure;
FIG. 4 is a schematic flowchart of an AS SMC procedure;
FIG. 5 is a schematic flowchart of a communication method according to this application;
FIG. 6 is a schematic flowchart of another communication method according to this application;
FIG. 7 is a schematic flowchart of still another communication method according to this application;
FIG. 8 is a schematic flowchart of still another communication method according to this application;
FIG. 9 is a schematic flowchart of still another communication method according to this application;
FIG. 10 is a block diagram of a communication apparatus 10 according to an embodiment of this application;
FIG. 11 is a diagram of another communication apparatus 20 according to an embodiment of this application; and
FIG. 12 is a diagram of a chip system 30 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is briefly referred to as a 3GPP network. The 3GPP network usually includes but is not limited to a 5G network, a 4th generation (4th-generation, 4G) mobile communication network, and another future communication system such as a 6th generation (6th-generation, 6G) network. The technical solutions are also applicable to an SNPN (Stand-alone Non-Public Network).

For ease of description, the PLMN or the 5G network is used as an example for description in embodiments of this application.

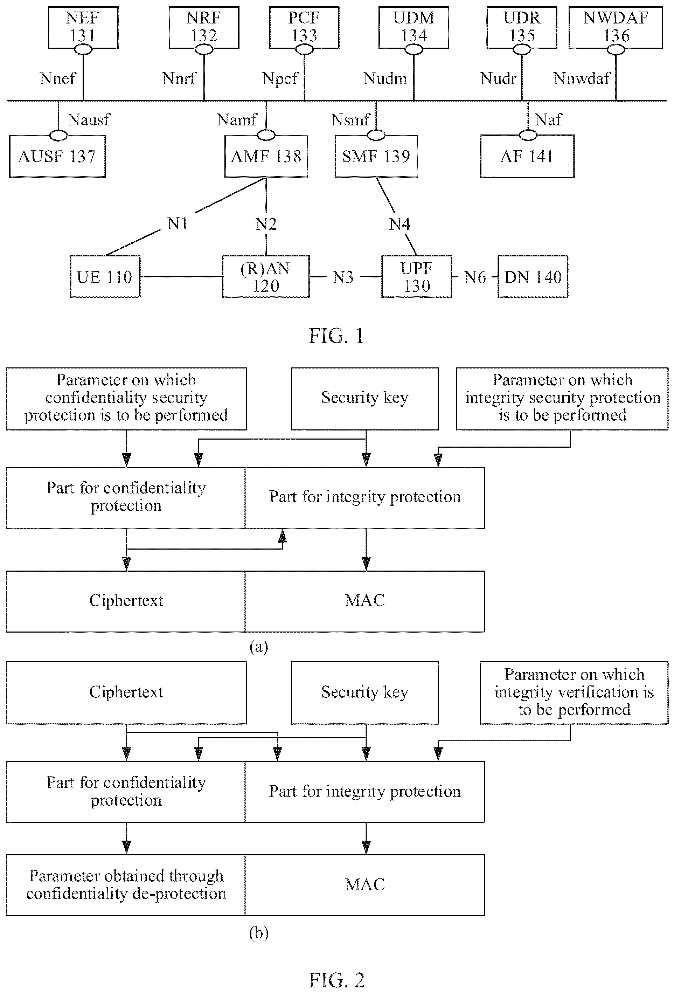

FIG. 1 is a diagram of a network architecture 100. A 5G network architecture based on a service-based architecture in a non-roaming scenario defined in a 3GPP standardization process is used as an example. As shown in the figure, the network architecture may include three parts: a terminal device part, a DN part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), or a wireless terminal in smart home (smart home). The terminal device herein is a 3GPP terminal. A type, a category, or the like of the terminal device is not limited in embodiments of this application. For ease of description, in this application, an example in which the UE represents the terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. The access network device (RAN device) in embodiments of this application is a device that provides a wireless communication function for the terminal device 110, and may also be referred to as a network device. The RAN device includes but is not limited to a next generation NodeB (next generation NodeB, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a small cell device (pico), a mobile switching center, a network device in a future network, or the like. In systems using different radio access technologies, devices with functions of the access network device may have different names. For ease of description, in all embodiments of this application, the foregoing apparatuses that provide the wireless communication function for the terminal device 110 are collectively referred to as an access network device, which is also referred to as a RAN or an AN for short. It should be understood that a specific type of the access network device is not limited in this specification.

The CN part may include but is not limited to the following NFs: a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by an operator, that is, the DN is a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server, to obtain an instruction of the control server, transmit collected sensor data to the control server according to the instruction, and the like. For another example, the data network DN 140 may be an internal office network of a company, a mobile phone or a computer of an employee of the company may be the terminal device 110, and the mobile phone or the computer of the employee may access information and data resources in the internal office network of the company. The terminal device 110 may establish a connection to the operator network through an interface (for example, N1) provided by the operator network, and use a service such as data and/or voice provided by the operator network. The terminal device 110 may further access the data network DN 140 through the operator network, and use an operator service deployed in the data network DN 140 and/or a service provided by a third party.

The following further briefly describes the NF functions included in the CN.
1. The UPF 130 is a gateway provided by the operator, and is a gateway for communication between the operator network and the data network DN 140. The UPF 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by the operator, and is mainly used to enable a third party to use a service provided by a network, support the network in opening a capability, an event, and data analysis of the network, convert security configuration information from an external application to a PLMN and exchange information inside and outside the PLMN, provide an API interface opened by the operator network, provide interaction between an external server and an internal operator network, and the like.
3. The NRF 132 is a control plane function provided by the operator, and may be configured to maintain real-time information of a network function and a service in a network. For example, the NRF 132 supports network service discovery, maintains services supported by NF configuration data (an NF profile) of NF instances, supports discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by the operator, and supports a unified policy framework to govern network behavior and provide subscription information related to a policy rule and a policy decision for another control function.
5. The UDM 134 is a control plane function provided by the operator, and is responsible for storage of a subscription permanent identifier (subscriber permanent identifier, SUPI) of a subscriber of the operator network, a generic public subscription identifier (generic public subscription identifier, GPSI) of the subscriber, a credential (credential), and other information. In a transmission process, confidentiality protection is first performed on the SUPI, and an SUPI obtained through the confidentiality protection is referred to as a subscription concealed identifier (subscription concealed identifier, SUCI). The information stored in the UDM 134 may be used for authentication and authorization for the terminal device 110 to access the operator network. The subscriber of the operator network may be specifically a user using a service provided by the operator network, for example, a user using a subscriber identity module (subscriber identity module, SIM) card of China Telecom or a user using a subscriber identity module card of China Mobile. The credential of the subscriber may be a long-term key stored in the subscriber identity module card, or a stored small file, for example, information related to encryption of the subscriber identity module card, and is used for authentication and/or authorization. It should be noted that, for ease of description, information such as the permanent identifier, the credential, a security context, authentication data (cookie), and a token related to verification/authentication and authorization is not limited or distinguished in embodiments of this application.
6. The UDR 135 is a control plane function provided by the operator, and provides a function of storing and obtaining subscription data for the UDM, provides a function of storing and obtaining policy data for the PCF, stores and obtains NF group ID (group ID) information of a user, and the like.
7. The NWDAF 136 is a control plane function provided by the operator, and main functions of the NWDAF 136 are to collect data from an NF, an external application function AF, an operations, administration and maintenance (operations, administration and maintenance, OAM) system, and the like, and provide the NF and the AF with NWDAF service registration, data exposure, data analysis, and the like. In this application, the NWDAF is mainly responsible for security-related data analysis. Therefore, in this application, the NWDAF may also be understood as a network element having a security analysis function. For example, the network element having a security analysis function is referred to as the NWDAF, and may have another network element name subsequently. This is not limited in this application.
8. The AUSF 137 is a control plane function provided by the operator, and is usually used for primary authentication, that is, authentication between the terminal device 110 (the subscriber) and the operator network. After receiving an authentication request initiated by the subscriber, the AUSF 137 may perform authentication and/or authorization on the subscriber by using authentication information and/or authorization information stored in the UDM 134, or generate authentication information and/or authorization information of the subscriber through the UDM 134. The AUSF 137 may feed back the authentication information and/or the authorization information to the subscriber.
9. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
   The AMF 138 is configured to perform a non-access stratum (non-access stratum, NAS) connection to the UE, and has a same 5G NAS security context as the UE. The 5G NAS security context includes KAMF, key identification information same as that of a NAS hierarchy key, a UE security capability, an uplink NAS COUNT value, and a downlink NAS COUNT value. The NAS hierarchy key includes a NAS confidentiality protection key and a NAS integrity security protection key that are respectively used for confidentiality security protection and integrity security protection of a NAS message.
10. The SMF 139 is a control plane network function provided by the operator network, and is responsible for managing a PDU session of the terminal device 110. The PDU session is a channel for transmitting a PDU, and the terminal device and the data network DN 140 need to transmit PDUs to each other through the PDU session. The PDU session is established, maintained, and deleted by the SMF 139. The SMF 139 includes session-related functions such as session management (for example, session establishment, modification, and release, including tunnel maintenance between the user plane function UPF 130 and the (R)AN 120), selection and control of the UPF 130, service and session continuity (service and session continuity, SSC) mode selection, and roaming.
11. The AF 141 is a control plane network function provided by the operator network, and is configured to provide application layer information. The AF 141 may interact with a policy framework through a network exposure function network element, or directly interact with a policy framework to make a policy decision request. The AF may be located inside or outside the operator network.

It may be understood that the foregoing network elements or functions may be physical entities in a hardware device, may be software instances running on dedicated hardware, or may be virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are merely examples, and do not constitute any limitation on functions of the messages.

For ease of description, in embodiments of this application, network functions (such as the NEF 131, ..., and the SMF 139) are collectively/briefly referred to as an NF. In other words, an NF described below in embodiments of this application may be replaced with any network function. In addition, FIG. 1 describes only some network functions as an example, and NFs described below are not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in the core network, for example, may be combined as required to form a network slice. These network elements of the core network may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

For ease of understanding of embodiments of this application, some basic concepts in this application are briefly described.

### 1. NAS security context:

For example, the NAS security context may be classified into a full (full) NAS security context and a partial (partial) NAS security context from a perspective of integrity.

The partial NAS security context includes Kamf and a key identifier (ngKSI) associated with Kamf, a UE security capability, an uplink NAS count value, and a downlink NAS count value. Compared with the partial NAS security context, the full NAS security context further includes an integrity security protection key and a confidentiality security protection (or referred to as encryption security protection) key, and a selected integrity security protection algorithm and confidentiality security protection algorithm.

For example, the NAS security context may be classified into a native (Native) NAS security context and a mapped (Mapped) NAS security context from a perspective of a source.

Kamf in the native NAS security context is generated by performing a primary authentication process, and is identified by native ngKSI. Kamf in the mapped NAS security context is generated by using another key in an interaction process from different generations of networks (for example, generated by using a 4G key in an interaction process from 4G to 5G), and is identified by mapped ngKSI.

For example, the NAS security context may be classified into a current (current) NAS security context and a non-current (non-current) NAS security context from a perspective of a state. The current NAS security context is a security context that has been activated most recently, and the non-current NAS security context is a security context that is not in use.

It can be learned from the foregoing descriptions that a specific type of the NAS security context may include a mapped, full native, or partial native security context, and a state may be current or non-current. For example, after completing primary authentication, UE and a core network generate a partial native context that is in a state "current". An AMF initiates a NAS security mode control (security mode control, SMC) procedure to the UE. After the NAS SMC succeeds, a full native NAS context in a state "current" is generated.

2. Activating security protection based on a confidentiality security protection algorithm refers to configuring a confidentiality security protection key and a confidentiality security protection algorithm.

Further, after security protection based on the confidentiality security protection algorithm is activated, a transmit end may perform confidentiality protection (for example, encryption) on a sent message by using the confidentiality security protection key and the confidentiality security protection algorithm; and a receive end may perform confidentiality de-protection (for example, decryption) on a received message by using the confidentiality security protection key and the confidentiality security protection algorithm.

3. Activating security protection based on an integrity security protection algorithm refers to configuring an integrity security protection key and an integrity security protection algorithm.

Further, after security protection based on the integrity security protection algorithm is activated, a transmit end may perform integrity security protection on a sent message by using the integrity security protection key and the integrity security protection algorithm, that is, calculate MAC used for integrity security protection; and a receive end may perform integrity security protection check on a received message by using the integrity security protection key and the integrity security protection algorithm, that is, determine whether received MAC is correct.

4. Security algorithm that can implement both confidentiality security protection and integrity security protection: The security algorithm that can implement both confidentiality security protection and integrity security protection in this application may be referred to as an authenticated encryption algorithm. One type of authenticated encryption algorithm is an authenticated encryption with associated data (authenticated encryption with associated data, AEAD) algorithm. The AEAD algorithm (which may also be referred to as an AEAD mode) can implement both data confidentiality security protection and data integrity security protection. In other words, that the AEAD algorithm can implement both data confidentiality security protection and data integrity security protection may also be understood as that the AEAD algorithm can implement data confidentiality security protection and data integrity security protection when a single key (AEAD key) is used as an input key.

For ease of understanding, a manner of using the authenticated encryption algorithm is briefly described with reference to (a) and (b) in FIG. 2.

It can be learned from (a) and (b) in FIG. 2 that the authenticated encryption algorithm includes a part for confidentiality protection and a part for integrity protection.

It can be learned from (a) in FIG. 2 that a transmit end may perform, based on a security key and the part for confidentiality protection, confidentiality protection (for example, encryption) on a parameter on which confidentiality security protection is to be performed, to obtain ciphertext. In addition, the transmit end may perform, based on the security key, the part for integrity protection, and the ciphertext, an integrity protection operation on a parameter on which integrity security protection is to be performed, to obtain MAC. The parameter on which integrity security protection is to be performed is transferred to a receive end in a plaintext manner.

For example, the transmit end performs confidentiality protection by using the parameter on which confidentiality security protection is to be performed and the security key as input of the part for confidentiality protection, to output the ciphertext; and performs the integrity protection operation by using the ciphertext, the security key, and the parameter on which integrity security protection is to be performed as input of the part for integrity protection, to obtain the MAC. It may be understood that, after confidentiality protection is performed on the parameter on which confidentiality security protection is to be performed, the ciphertext is obtained, and integrity protection is performed on the ciphertext, that is, both confidentiality security protection and integrity security protection are performed on the parameter on which confidentiality security protection is to be performed.

It can be learned from (b) in FIG. 2 that a receive end may perform an integrity protection operation based on a security key, a parameter on which integrity verification is to be performed, received ciphertext, and the part for integrity protection, to obtain MAC. It should be understood that, in the absence of a security attack, the parameter on which integrity verification is to be performed is the foregoing parameter on which integrity security protection is to be performed. In addition, the receive end may perform confidentiality de-protection (for example, decryption) on the ciphertext based on the security key, the ciphertext, and the part for confidentiality protection, to obtain a parameter obtained through the confidentiality de-protection (for example, plaintext obtained by decrypting the ciphertext). It should be understood that, in the absence of a security attack, the parameter obtained through the confidentiality de-protection is the foregoing parameter on which confidentiality security protection is to be performed.

For example, the receive end performs the integrity protection operation by using the received parameter on which integrity verification is to be performed, the security key, and the ciphertext as input of the part for integrity protection, to obtain the MAC, and compares whether the MAC obtained by the receive end is consistent with received MAC, so as to implement integrity security protection (for example, integrity check). The receive end may further perform confidentiality de-protection (for example, decryption) by using the ciphertext and the security key as input of the part for confidentiality protection, to output the parameter obtained through the confidentiality de-protection.

It can be learned from the foregoing that, for the transmit end, confidentiality protection is encryption; and for the receive end, integrity protection is integrity check, and confidentiality de-protection is decryption.

For example, it is assumed that the authenticated encryption algorithm shown in (a) and (b) in FIG. 2 is an AEAD algorithm.

For the transmit end, input of the AEAD algorithm includes plaintext (plaintext) (for example, the parameter on which confidentiality security protection is to be performed shown in (a) in FIG. 2), additional authentication data (additional authenticated data, AAD) (for example, the parameter on which integrity security protection is to be performed shown in (a) in FIG. 2), and an AEAD key (for example, the security key shown in (a) in FIG. 2). The plaintext part is encrypted by the AEAD key to obtain ciphertext (ciphertext) (for example, the ciphertext shown in (a) in FIG. 2), and the ciphertext is used as input of the part for integrity protection. The AAD is a part on which integrity security protection instead of confidentiality security protection is performed. Output of the AEAD algorithm includes the ciphertext part and a MAC part. The AEAD key may be used for both confidentiality security protection and integrity security protection, and therefore may also be referred to as a single key.

For the receive end, input of the AEAD algorithm includes ciphertext, AAD, and an AEAD key. The ciphertext, the AAD, and the AEAD key are used as input of the part for integrity protection, and the ciphertext and the AEAD key are used as input of the part for confidentiality protection.

For example, the AAD may be carried in a message as plaintext to be transferred between the transmit end and the receive end, or may be a known parameter shared by the transmit end and the receive end.

In this application, the following relationships exist between the authenticated encryption algorithm, the integrity security protection algorithm, and the confidentiality security protection algorithm:

(1) The authenticated encryption algorithm may be used to determine the corresponding integrity security protection algorithm.

In an optional manner, that the authenticated encryption algorithm is used to determine the corresponding integrity security protection algorithm includes:

An algorithm obtained by setting the part for confidentiality protection in the authenticated encryption algorithm to null may be considered as the integrity security protection algorithm. That the part for confidentiality protection is set to null may be understood as that the part for confidentiality protection is null-scheme (null-scheme). When the part for confidentiality protection is set to null, a parameter, as input of the part for confidentiality protection, on which confidentiality protection is to be performed is the same as ciphertext as output of the part for confidentiality protection, that is, confidentiality protection is not implemented on the part for confidentiality protection.

Optionally, the integrity security protection algorithm determined in this manner may also be referred to as an integrity security protection algorithm of the authenticated encryption algorithm.

In another optional manner, that the authenticated encryption algorithm is used to determine the corresponding integrity security protection algorithm includes:

The integrity security protection algorithm corresponding to the authenticated encryption algorithm is determined according to a preset rule. The preset rule may be a correspondence between the authenticated encryption algorithm and the integrity security protection algorithm. For example, the correspondence between the integrity security protection algorithm and the authenticated encryption algorithm may be: an SNOW-AEAD algorithm corresponds to an SNOW integrity security protection algorithm, a ZUC-AEAD algorithm corresponds to a ZUC integrity security protection algorithm, and an AES-AEAD algorithm corresponds to an AES integrity security protection algorithm. In this case, the SNOW integrity security protection algorithm may be determined based on the SNOW-AEAD algorithm and the correspondence, and the ZUC integrity security protection algorithm may be determined based on the ZUC-AEAD algorithm and the correspondence. Others are similar, and details are not described again. In addition, the correspondence between the integrity security protection algorithm and the authenticated encryption algorithm may also be referred to as a mapping relationship between the integrity security protection algorithm and the authenticated encryption algorithm. This is not limited in this application.

For example, a manner of obtaining the integrity security protection algorithm by setting the part for confidentiality protection in the authenticated encryption algorithm to null is referred to as mapping. This is not limited in this application. Therefore, that the authenticated encryption algorithm may be used to determine the corresponding integrity security protection algorithm may also be understood as that the authenticated encryption algorithm may be used to map the corresponding integrity security protection algorithm.

(2) The authenticated encryption algorithm may be used to determine the corresponding confidentiality security protection algorithm.

In an optional manner, that the authenticated encryption algorithm is used to determine the corresponding confidentiality security protection algorithm includes:

An algorithm obtained by setting the part for integrity protection in the authenticated encryption algorithm to null may be considered as the confidentiality security protection algorithm. That the part for integrity protection is set to null may be understood as that the part for integrity protection is null-scheme (null-scheme). When the part for integrity protection is set to null, output MAC is a constant (for example, all-zero), that is, integrity protection is not implemented on the part for integrity protection.

Optionally, the confidentiality security protection algorithm determined in this manner may also be referred to as a confidentiality security protection algorithm of the authenticated encryption algorithm.

In another optional manner, that the authenticated encryption algorithm is used to determine the corresponding confidentiality security protection algorithm includes:

The confidentiality security protection algorithm corresponding to the authenticated encryption algorithm is determined according to a preset rule. The preset rule may be a correspondence between the authenticated encryption algorithm and the confidentiality security protection algorithm. For example, the correspondence between the confidentiality security protection algorithm and the authenticated encryption algorithm may be: an SNOW-AEAD algorithm corresponds to an SNOW confidentiality security protection algorithm, a ZUC-AEAD algorithm corresponds to a ZUC confidentiality security protection algorithm, and an AES-AEAD algorithm corresponds to an AES confidentiality security protection algorithm. In this case, the SNOW confidentiality security protection algorithm may be determined based on the SNOW-AEAD algorithm and the correspondence, and the ZUC confidentiality security protection algorithm may be determined based on the ZUC-AEAD algorithm and the correspondence. Others are similar, and details are not described again. In addition, the correspondence between the confidentiality security protection algorithm and the authenticated encryption algorithm may also be referred to as a mapping relationship between the confidentiality security protection algorithm and the authenticated encryption algorithm. This is not limited in this application.

For example, a manner of obtaining the confidentiality security protection algorithm by setting the part for integrity protection in the authenticated encryption algorithm to null is referred to as mapping. This is not limited in this application. Therefore, that the authenticated encryption algorithm may be used to determine the corresponding confidentiality security protection algorithm may also be understood as that the authenticated encryption algorithm may be used to map the corresponding confidentiality security protection algorithm.

(3) The integrity security protection algorithm may be used to determine the corresponding authenticated encryption algorithm.

For example, that the integrity security protection algorithm is used to determine the corresponding authenticated encryption algorithm includes:

The authenticated encryption algorithm corresponding to the integrity security protection algorithm is determined according to a preset rule. The preset rule may be a correspondence between the authenticated encryption algorithm and the integrity security protection algorithm. For an example, refer to the descriptions in (1). In this case, the SNOW integrity security protection algorithm may be used to determine the SNOW-AEAD algorithm, and the ZUC integrity security protection algorithm may be used to determine the ZUC-AEAD algorithm. Others are similar, and details are not described again.

For example, the correspondence between the authenticated encryption algorithm and the integrity security protection algorithm may also be referred to as a mapping relationship between the authenticated encryption algorithm and the integrity security protection algorithm. Therefore, that the integrity security protection algorithm may be used to determine the corresponding authenticated encryption algorithm may also be understood as that the integrity security protection algorithm may be used to map the corresponding authenticated encryption algorithm.

(4) The confidentiality security protection algorithm may be used to determine the corresponding authenticated encryption algorithm.

For example, that the confidentiality security protection algorithm is used to determine the corresponding authenticated encryption algorithm includes:

The authenticated encryption algorithm corresponding to the confidentiality security protection algorithm is determined according to a preset rule. The preset rule may be a correspondence between the authenticated encryption algorithm and the confidentiality security protection algorithm. For an example, refer to the descriptions in (2). In this case, the SNOW confidentiality security protection algorithm may be used to determine the SNOW-AEAD algorithm, and the ZUC confidentiality security protection algorithm may be used to determine the ZUC-AEAD algorithm. Others are similar, and details are not described again.

For example, the correspondence between the authenticated encryption algorithm and the confidentiality security protection algorithm may also be referred to as a mapping relationship between the authenticated encryption algorithm and the confidentiality security protection algorithm. Therefore, that the confidentiality security protection algorithm may be used to determine the corresponding authenticated encryption algorithm may also be understood as that the confidentiality security protection algorithm may be used to map the corresponding authenticated encryption algorithm.

### 5. NAS SMC procedure:

For example, the NAS SMC procedure mainly has the following functions:
(1) After primary authentication ends, an AMF sends a NAS security mode command (security mode command, SMC) message to convert a partial native context into a full native context for subsequent use.
(2) Change a NAS security algorithm in a current NAS security context. For example, in an AMF change scenario (for example, an AMF change scenario such as an N2-handover or mobility registration), the NAS security algorithm in the current NAS security context needs to be changed.
(3) Change an uplink NAS count (count) value in a most recent NAS security mode command (security mode complete, SMP) message to refresh KgNB.
(4) Send a selected EPS NAS security algorithm to UE.

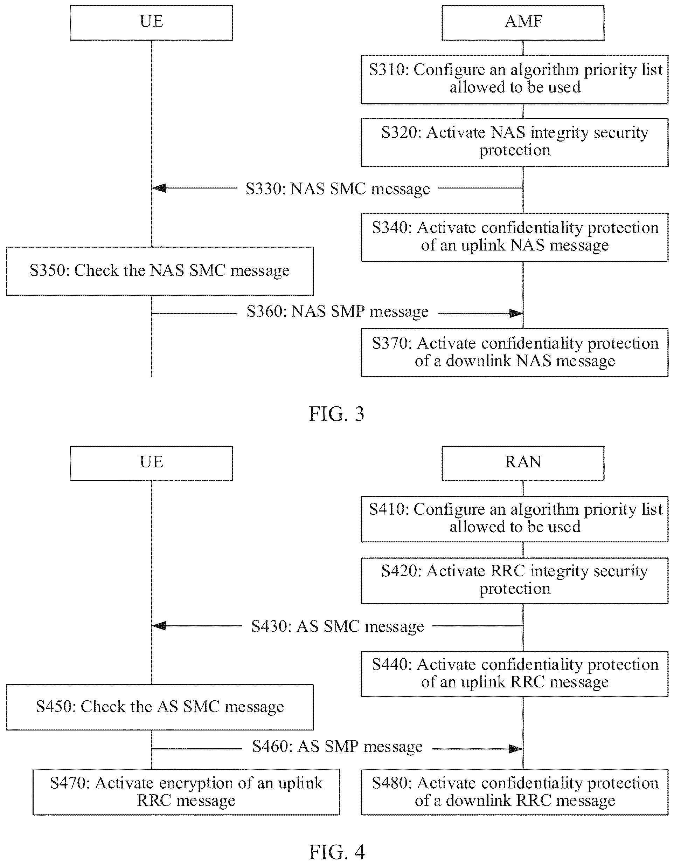

For ease of understanding, a NAS SMC procedure is described in detail with reference to FIG. 3.

FIG. 3 is a schematic flowchart of a NAS SMC procedure, including the following steps.

S310: An AMF configures an algorithm priority list allowed to be used.

For example, a NAS integrity security protection algorithm priority list (for example, NAS integrity security protection algorithms configured on the AMF include an AES integrity security protection algorithm, an SNOW integrity security protection algorithm, a ZUC integrity security protection algorithm, a null integrity security protection algorithm, and the like, where the plurality of configured integrity security protection algorithms are respectively the AES integrity security protection algorithm, the SNOW integrity security protection algorithm, the ZUC integrity security protection algorithm, and the null integrity security protection algorithm in descending order of priorities) and a NAS confidentiality security protection algorithm priority list (for example, NAS confidentiality security protection algorithms configured on the AMF include a ZUC confidentiality security protection algorithm, an AES confidentiality security protection algorithm, an SNOW confidentiality security protection algorithm, and a null integrity security protection algorithm, where the plurality of configured confidentiality security protection algorithms are respectively the ZUC confidentiality security protection algorithm, the AES confidentiality security protection algorithm, the SNOW confidentiality security protection algorithm, and the null integrity security protection algorithm in descending order of priorities) are configured on the AMF.

The AMF obtains a UE security capability, and selects a NAS integrity security protection algorithm and a NAS confidentiality security protection algorithm based on the UE security capability and the algorithm priority lists. For example, if the UE security capability includes that supported NAS integrity security protection algorithms are the AES integrity security protection algorithm and the SNOW integrity security protection algorithm, the integrity security protection algorithm selected by the AMF is the AES integrity security protection algorithm. For another example, if the UE security capability includes that supported NAS confidentiality security protection algorithms are the AES confidentiality security protection algorithm and the ZUC confidentiality security protection algorithm, the confidentiality security protection algorithm selected by the AMF is the ZUC confidentiality security protection algorithm.

S320: The AMF activates NAS integrity security protection.

Before sending a NAS SMC message, the AMF activates NAS integrity security protection.

For example, the AMF calculates an integrity security protection key Knasint. Further, the AMF performs integrity security protection calculation on the NAS SMC message, and obtains NAS MAC. For example, an input key for calculating the NAS MAC is Knasint, input parameters are a bearer identity, a direction parameter, a value of a counter, and an information element in a to-be-protected NAS SMC message, and a used security protection algorithm is the selected integrity security protection algorithm.

The bearer identity is used to distinguish between different bearers. For example, in a 3GPP connection, the bearer identity may be "0x01", and in a non-3GPP connection, the bearer identity may be "0x02". The direction parameter is used to distinguish between an uplink message and a downlink message. For example, in the uplink message, a value of the direction parameter is 0, and in the downlink message, a value of the direction parameter is 1. The value of the counter is used as a freshness parameter to prevent a replay attack. The information element in the to-be-protected NAS SMC message may be a selected EPS security protection algorithm, an international mobile station equipment identity and software version number (international mobile station equipment identity and software version number, IMEISV) request indication, or the like.

It should be noted that, in the NAS SMC message, integrity security protection is performed, and confidentiality security protection is not performed. This is because a UE side needs to use a parameter (such as ngKSI) in the message to obtain a key and an algorithm for integrity check.

S330: The AMF sends the NAS SMC message to UE.

The NAS SMC message includes but is not limited to the selected confidentiality security protection algorithm, the selected integrity security protection algorithm, ngKSI, a replayed UE security capability, a Kamf change indication, and the like. The selected confidentiality algorithm and the selected integrity security protection algorithm are a part of a NAS security context, and are used by the UE and an AMF side to negotiate a security protection algorithm for subsequent security protection. ngKSI identifies Kamf. The replayed security capability is used to check whether the security capability is tampered with, that is, to prevent a degradation attack. The Kamf change indication indicates the UE to calculate new Kamf.

The NAS SMC message includes a "security header type" information element, and the information element indicates a protection manner of the NAS message. When the NAS message is a NAS SMC message, a value of the information element is 0011, to indicate that integrity security protection is performed by using a 5G NAS security context.

It should be noted that the confidentiality security protection algorithm and the integrity security protection algorithm that are carried in the NAS SMC message are subsequently used as a part of the security context.

S340: The AMF activates confidentiality protection of the uplink NAS message.

After sending the NAS SMC message, the AMF activates confidentiality de-protection (for example, decryption) of the uplink NAS message.

S350: The UE checks the NAS SMC message.

For example, the UE obtains corresponding Knasint based on ngKSI, and performs integrity check based on the integrity security protection algorithm carried in the message. If the integrity check succeeds, the UE activates integrity security protection and confidentiality security protection of an uplink NAS message and a decryption operation of a downlink message.

S360: The UE sends a NAS SMP message to the AMF.

When the check in step S350 succeeds, the UE sends the NAS SMP message to the AMF, where the message is integrity security-protected and confidentiality security-protected. For example, an integrity security protection key is Knasint, an integrity security protection algorithm is the selected integrity security protection algorithm carried in step S330, a confidentiality security protection key is Knasenc, and a confidentiality security protection algorithm is the selected confidentiality security protection algorithm carried in step S330. NAS MAC is used to perform integrity security protection. The AMF receives the NAS SMP message, and performs decryption and integrity check on the message.

When the NAS message is a NAS SMP message, a value of the information element is 0100, to indicate that confidentiality and integrity security protection are performed by using a 5G NAS security context.

S370: The AMF activates confidentiality protection of the downlink NAS message.

After receiving the NAS SMP message, the AMF activates confidentiality protection (for example, encryption) of the downlink NAS message.

It should be noted that, in an existing security mechanism, confidentiality security protection and integrity security protection are independent of each other, that is, keys and algorithms are isolated.

### 6. AS SMC procedure:

For example, functions of the AS SMC procedure are mainly to perform radio resource control (radio resource control, RRC) and user plane (user plane, UP) algorithm negotiation and RRC security activation. An RRC reconfiguration message is mainly used for UP security activation.

For ease of understanding, an AS SMC procedure is described in detail with reference to FIG. 4.

FIG. 4 is a schematic flowchart of an AS SMC procedure, including the following steps.

S410: An access network device configures an algorithm priority list allowed to be used.

For example, an AS integrity security protection algorithm priority list (for example, AS integrity security protection algorithms configured on the access network device include an AES integrity security protection algorithm, an SNOW integrity security protection algorithm, a ZUC integrity security protection algorithm, and a null integrity security protection algorithm, where the plurality of configured integrity security protection algorithms are respectively the AES integrity security protection algorithm, the SNOW integrity security protection algorithm, the ZUC integrity security protection algorithm, and the null integrity security protection algorithm in descending order of priorities) and an AS confidentiality security protection algorithm priority list (for example, AS confidentiality security protection algorithms configured on the access network device include a ZUC confidentiality security protection algorithm, an AES confidentiality security protection algorithm, an SNOW confidentiality security protection algorithm, and a null integrity security protection algorithm, where the plurality of configured confidentiality security protection algorithms are respectively the ZUC confidentiality security protection algorithm, the AES confidentiality security protection algorithm, the SNOW confidentiality security protection algorithm, and the null integrity security protection algorithm in descending order of priorities) are configured on the access network device.

The access network device receives a UE security capability, and selects an AS integrity security protection algorithm and an AS confidentiality security protection algorithm based on the UE security capability and the algorithm priority lists. For example, if the UE security capability includes that supported AS integrity security protection algorithms are the AES integrity security protection algorithm and the SNOW integrity security protection algorithm, the integrity security protection algorithm selected by the access network device is the AES integrity security protection algorithm. For another example, if the UE security capability includes that supported AS confidentiality security protection algorithms are the AES confidentiality security protection algorithm and the ZUC confidentiality security protection algorithm, the confidentiality security protection algorithm selected by the access network device is the ZUC confidentiality security protection algorithm.

S420: Activate RRC integrity security protection.

Before sending an AS SMC message, the access network device activates RRC integrity security protection.

For example, the access network device performs integrity security protection calculation on the AS SMC message, and obtains MAC-I. For example, an input key for calculating AS MAC is Krrcint, input parameters are a bearer identity, a direction parameter, and a value of a counter, and a used security protection algorithm is the selected integrity security protection algorithm.

The bearer identity is used to distinguish between different bearers. For example, in a 3GPP connection, the bearer identity may be "0x01", and in a non-3GPP connection, the bearer identity may be "0x02". The direction parameter is used to distinguish between an uplink message and a downlink message. For example, in the uplink message, a value of the direction parameter is 0, and in the downlink message, a value of the direction parameter is 1. The value of the counter is used as a freshness parameter to prevent a replay attack.

It should be noted that, in the AS SMC message, only integrity security protection is performed, and confidentiality security protection is not performed. This is because a UE side needs to use a parameter (such as ngKSI) in the message to obtain a key and an algorithm for integrity check.

S430: The access network device sends the AS SMC message to UE.

The AS SMC message includes but is not limited to the selected confidentiality security protection algorithm and the selected integrity security protection algorithm. The selected confidentiality algorithm and the selected integrity security protection algorithm are a part of an AS security context, and are used by the UE and an access network device side to negotiate a security protection algorithm for subsequent security protection.

It should be noted that security protection algorithms of an RRC message and a UP message may be unified, that is, the selected confidentiality security protection algorithm and the selected integrity security protection algorithm are applicable to both security protection of the RRC message and security protection of the UP message; or security protection algorithms of an RRC message and a UP message may be independent, that is, the message includes a selected RRC confidentiality security protection algorithm, a selected RRC integrity security protection algorithm, a selected UP confidentiality security protection algorithm, and a selected UP integrity security protection algorithm.

S440: The access network device activates confidentiality protection of the uplink RRC message.

After sending the AS SMC message, the access network device activates confidentiality de-protection (for example, decryption) of the uplink RRC message.

S450: The UE checks the AS SMC message.

For example, the UE obtains corresponding Krrcint, and performs integrity check based on the integrity security protection algorithm carried in the message. If the integrity check succeeds, the UE activates integrity security protection and confidentiality security protection of an uplink RRC message and a decryption operation of a downlink message.

S460: The UE sends an AS SMP message to the access network device.

When the check in step S450 succeeds, the UE sends the AS SMP message to the access network device, where the message is integrity security-protected and confidentiality security-protected. For example, an integrity security protection key is Krrcint, an integrity security protection algorithm is the selected integrity security protection algorithm carried in the AS SMC message in step S430, a confidentiality security protection key is Krrcenc, and a confidentiality security protection algorithm is the selected confidentiality security protection algorithm carried in the AS SMC message in step S430.

S470: The UE activates confidentiality of the uplink RRC message.

After sending the AS SMP message, the UE activates confidentiality protection of the uplink RRC message.

S480: The access network device activates confidentiality protection of the downlink RRC message.

After receiving the AS SMP message, the access network device activates confidentiality (for example, encryption) of the downlink RRC message.

It should be noted that, in an existing security mechanism, confidentiality security protection and integrity security protection are independent of each other, that is, keys and algorithms are isolated.

In addition, to facilitate understanding of embodiments of this application, the following several descriptions are provided.

First, in this application, "indicating" may include "directly indicating" and "indirectly indicating". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "510" and "520" are merely identifiers for ease of description, and do not limit a sequence of performing steps.

Third, in this application, a word "example" or "for example" represents giving an example, an illustration, or a description. Any embodiment or design scheme described as "example" or "for example" in this application should not be explained as being more preferred or having more advantages than another embodiment or design scheme. To be precise, use of the word such as "example" or "for example" is intended to present a related concept in a specific manner.

Fourth, "stored" in embodiments of this application may be "stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, "protocols" in embodiments of this application may be standard protocols in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement same or similar functions in an existing or future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes a scenario to which a communication method provided in embodiments of this application can be applied, describes basic concepts that may be used in embodiments of this application, and describes a NAS SMC procedure and an AS SMC procedure in the basic concepts with reference to FIG. 3 and FIG. 4. In the procedures shown in FIG. 3 and FIG. 4, confidentiality security protection and integrity security protection are respectively based on a confidentiality security protection algorithm and an integrity security protection algorithm. In other words, if confidentiality security protection and integrity security protection are performed on a message transmitted between a terminal device and a network device (for example, an AMF or an access network device), confidentiality security protection and integrity security protection need to be respectively performed based on a confidentiality security protection algorithm and an integrity security protection algorithm (for example, the algorithms carried in step S330 in FIG. 3 or step S430 in FIG. 4 include the selected confidentiality security protection algorithm and the selected integrity security protection algorithm).

When confidentiality security protection and integrity security protection need to be performed, a combination of the confidentiality security protection algorithm and the integrity security protection algorithm has a security risk. For example, by using the confidentiality security protection algorithm and the integrity security protection algorithm, security protection is performed on the message transmitted between the terminal device and the network device (for example, an AMF or an access network device), which specifically includes that integrity security protection is first performed on the message based on the integrity security protection algorithm and then confidentiality security protection is performed on the message by using an integrity security protection result as an input parameter of the confidentiality security protection algorithm. When the integrity security protection result is used as the input parameter of confidentiality security protection, there may be algorithm splicing, which poses a security risk.

This application provides a communication method, which may be applied to the communication system shown in FIG. 1, to implement confidentiality security protection and integrity security protection.

It should be further understood that a specific structure of an execution body of the method provided in embodiments of this application is not specifically limited in the following embodiments, provided that communication can be performed according to the method provided in embodiments of this application by running a program that records code of the method provided in embodiments of this application. For example, the method provided in embodiments of this application may be performed by a network device, or a functional module that can invoke and execute a program in the network device.

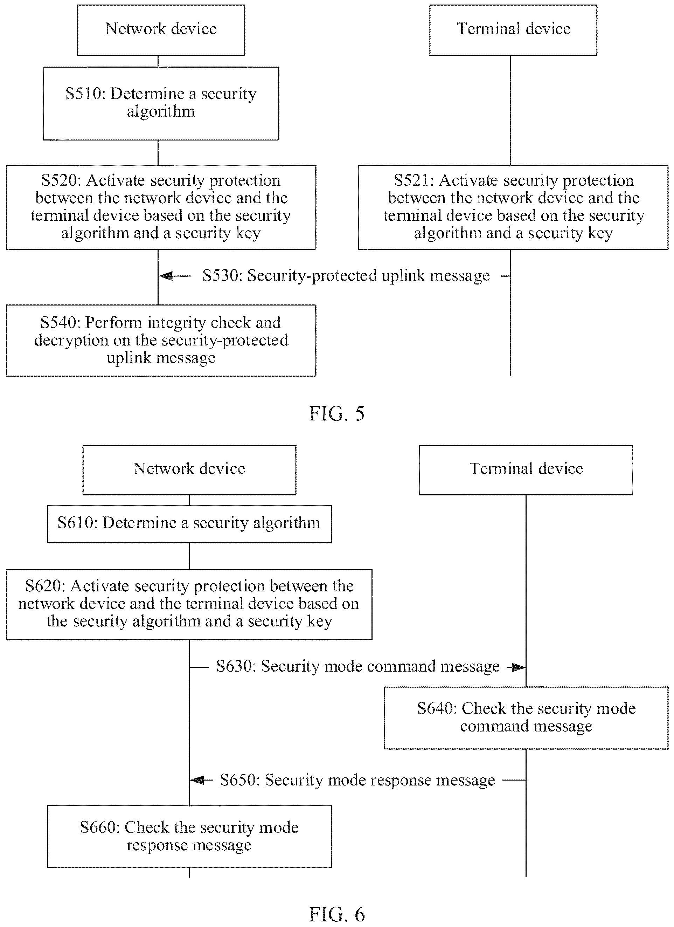

FIG. 5 is a schematic flowchart of a communication method according to this application. In the communication method, a network device determines a security algorithm that can implement both confidentiality security protection and integrity security protection, and after determining the security algorithm, activates the security algorithm to perform security protection on an uplink message. Because the security algorithm determined by the network device can implement both confidentiality security protection and integrity security protection, when performing security check on the uplink message, the network device may perform integrity check and decryption based on a same security key, thereby avoiding a security risk in a combination of a confidentiality security protection algorithm and an integrity security protection algorithm. The combination of the confidentiality security protection algorithm and the integrity security protection algorithm may be understood as: performing integrity protection or check based on the integrity security protection algorithm and a key #1 corresponding to the integrity security protection algorithm, and performing confidentiality protection or decryption based on the confidentiality security protection algorithm and a key #2 corresponding to the confidentiality security protection algorithm, that is, respectively implementing confidentiality security protection and integrity security protection based on different algorithms and different keys.

For ease of understanding, the security risk in the combination of the confidentiality security protection algorithm and the integrity security protection algorithm is briefly described as follows: By using the confidentiality security protection algorithm and the integrity security protection algorithm, security protection is performed on a message transmitted between a terminal device and the network device (for example, an AMF or an access network device), which specifically includes that integrity security protection is first performed on the message based on the integrity security protection algorithm and then confidentiality security protection is performed on the message by using an integrity security protection result as an input parameter of the confidentiality security protection algorithm. When the integrity security protection result is used as the input parameter of confidentiality security protection, there may be algorithm splicing, which poses a security risk.

The security algorithm in the following embodiment shown in FIG. 5 may be the authenticated encryption algorithm described above, including a part for confidentiality protection and a part for integrity protection, and can implement both confidentiality security protection and integrity security protection. For example, the security algorithm is an AEAD algorithm. The security algorithm and the authenticated encryption algorithm in embodiments of this application may be replaced with each other.

A security key in the following embodiment shown in FIG. 5 is an input key of the security algorithm. Based on the security key and the security algorithm, integrity security protection and confidentiality security protection are performed, or integrity check and decryption are performed on a received message. The security key is a key shared between the terminal device and the network device. For example, the security key is a key generated in a primary authentication process, or the security key is a key derived based on a key generated in a primary authentication process.

Specifically, the communication method includes the following steps.

S510: The network device determines the security algorithm.

The network device may be the AMF shown in FIG. 1, or may be an access network device. It should be understood that a name of the network device is not limited in this embodiment, and all devices that can implement functions of the network device in this embodiment may be considered as the network device in this embodiment.

In a possible implementation, if the network device is the AMF, the security algorithm determined by the network device in this embodiment is used to perform security protection on a NAS message transmitted between the terminal device and the AMF. For example, the security algorithm is used to perform security protection on a security mode command message and a security mode complete message that are transmitted in a NAS SMC procedure, and a NAS message transmitted after the NAS SMC procedure.

In another possible implementation, if the network device is the access network device, the security algorithm determined by the network device in this embodiment is used to perform security protection on an AS message transmitted between the terminal device and the access network device. For example, the security algorithm is used to perform security protection on an RRC message (for example, a security mode command message or a security mode complete message) transmitted in an AS SMC procedure. For another example, the security algorithm is used to perform security protection on a user plane (user plane, UP) message transmitted after the AS SMC procedure.

It should be noted that, when the network device is the access network device, the security algorithm selected by the network device may be used to perform security protection on both the RRC message and the UP message; or the security algorithm selected by the network device is an algorithm used to perform security protection on the RRC message, and the network device selects another integrity security protection algorithm or confidentiality security protection algorithm, or another authenticated encryption algorithm to perform security protection on the UP message. For example, the network device selects a plurality of algorithms (for example, the integrity security protection algorithm, the confidentiality security protection algorithm, and the security algorithm), and may determine a to-be-used security protection algorithm based on a user plane message security protection requirement.

It should be understood that whether the network device further determines an algorithm in addition to the security algorithm is not limited in this embodiment.

In this embodiment, at least one security algorithm is configured on the network device, the at least one security algorithm has different priorities, and each security algorithm can implement both confidentiality security protection and integrity security protection. An algorithm list that includes the at least one security algorithm and that can represent a priority relationship of the at least one security algorithm is referred to as a first algorithm priority list.

By way of example but not limitation, the first algorithm priority list configured on the network device includes an AES AEAD algorithm, an SNOW AEAD algorithm, a ZUC AEAD algorithm, a null algorithm, and the like, where the plurality of configured authenticated encryption algorithms are respectively the AES AEAD algorithm, the SNOW AEAD algorithm, the ZUC AEAD algorithm, and the null algorithm in descending order of priorities.

For example, an integrity security protection algorithm priority list and a confidentiality security protection algorithm priority list configured on the network device in this embodiment are compatible with an integrity security protection algorithm priority list and a confidentiality security protection algorithm priority list configured on the network device in an existing mechanism.

For example, in this embodiment, in addition to the first algorithm priority list, the network device is further configured with the integrity security protection algorithm priority list and the confidentiality security protection algorithm priority list.

The integrity security protection algorithm priority list includes an AES integrity security protection algorithm, an SNOW integrity security protection algorithm, a ZUC integrity security protection algorithm, a null integrity security protection algorithm, and the like, and the algorithms are the AES integrity security protection algorithm, the SNOW integrity security protection algorithm, the ZUC integrity security protection algorithm, and the null integrity security protection algorithm in descending order of priorities.

The confidentiality security protection algorithm priority list includes a ZUC confidentiality security protection algorithm, an AES confidentiality security protection algorithm, an SNOW confidentiality security protection algorithm, a null integrity security protection algorithm, and the like, and the algorithms are the ZUC confidentiality security protection algorithm, the AES confidentiality security protection algorithm, the SNOW confidentiality security protection algorithm, and the null integrity security protection algorithm in descending order of priorities.

Optionally, when the first algorithm priority list, and the integrity security protection algorithm priority list and the confidentiality security protection algorithm priority list that are compatible with those in the existing mechanism are configured on the network device, an algorithm selection policy may be further configured on the network device, and the algorithm selection policy indicates an algorithm selection principle.

In a possible implementation, that the network device selects the security algorithm may be: The network device selects the security algorithm based on a UE security capability, an algorithm priority list (for example, the first algorithm priority list, the integrity security protection algorithm priority list, and/or the confidentiality security protection algorithm priority list), and/or the algorithm selection policy.

For example, the algorithm selection policy is configured on the network device, and the algorithm selection policy may be preferentially using an algorithm in the first algorithm priority list. To be specific, when both the UE and the network device support a same security algorithm (for example, the AEAD algorithm), the security algorithm is selected based on the first algorithm priority list; otherwise, the integrity security protection algorithm and the confidentiality security protection algorithm are selected based on the integrity security protection algorithm priority list and the confidentiality security protection algorithm priority list.

For another example, the algorithm selection policy may alternatively be preferentially using the integrity security protection algorithm and the confidentiality security protection algorithm. To be specific, when both the UE and the network device support a same integrity security protection algorithm, the integrity security protection algorithm is selected based on the integrity security protection algorithm priority list to perform security protection; and/or when both the UE and the network device support a same confidentiality security protection algorithm, the confidentiality security protection algorithm is selected based on the confidentiality security protection algorithm priority list to perform security protection.

In another possible implementation, that the network device selects the security algorithm may be: The network device selects the security algorithm depending on whether the first algorithm priority list exists locally.

For example, when the first algorithm priority list, the integrity security protection algorithm priority list, and the confidentiality security protection algorithm priority list are configured on the network device, the network device preferentially selects the security algorithm from the first algorithm priority list based on a UE security capability.

For another example, when the integrity security protection algorithm priority list and the confidentiality security protection algorithm priority list are configured but the first algorithm priority list is not configured on the network device, the network device selects the security algorithm based on a UE security capability, the integrity security protection algorithm priority list, and the confidentiality security protection algorithm priority list.

It should be understood that the foregoing two possible implementations are merely examples for describing how the network device determines the security algorithm. The network device may alternatively randomly select one security algorithm. For another example, the network device may determine the security algorithm based on historical communication data. Examples are not described herein one by one.

In addition, that the network device determines the security algorithm in this embodiment may alternatively include: selecting an integrity security protection algorithm and/or a confidentiality security protection algorithm, and determining the security algorithm based on the selected integrity security protection algorithm and/or confidentiality security protection algorithm. Specifically, a manner of determining the security algorithm based on the integrity security protection algorithm is described above, and details are not described herein again; and a manner of determining the security algorithm based on the confidentiality security protection algorithm is also described above, and details are not described herein again.

For example, in this embodiment, before determining the security algorithm, the network device determines that a trigger condition is met. It may be understood that the network device selects the security algorithm when the trigger condition is met. The trigger condition includes but is not limited to: after primary authentication ends, determining to initiate a security mode command procedure by the network device; or a scenario in which the network device changes; or determining to change an uplink count value by the network device.

It can be learned from the foregoing descriptions that the security algorithm determined by the network device in this embodiment may be an authenticated encryption algorithm that can implement both confidentiality security protection and integrity security protection; or may be a confidentiality security protection algorithm and an integrity security protection algorithm; or may be an authenticated encryption algorithm selected, and a confidentiality security protection algorithm and an integrity security protection algorithm that are selected. In this embodiment, an example in which the network device determines to obtain the security algorithm is used below for description.

S520: The network device activates security protection between the network device and the terminal device based on the security algorithm and the security key.

Specifically, that the network device activates security protection between the network device and the terminal device based on the security algorithm and the security key includes: The network device configures the security algorithm and the security key corresponding to the security algorithm.

S521: The terminal device activates security protection between the network device and the terminal device based on the security algorithm and the security key.

Specifically, that the terminal device activates security protection between the network device and the terminal device based on the security algorithm and the security key includes: The terminal device configures the security algorithm and the security key corresponding to the security algorithm.

A sequence relationship between S520 and S521 is not limited in this embodiment. The network device may first activate security protection between the network device and the terminal device based on the security algorithm and the security key, or the terminal device may first activate security protection between the network device and the terminal device based on the security algorithm and the security key.

After the terminal device activates security protection between the network device and the terminal device based on the security algorithm and the security key, the terminal device may perform security protection on a to-be-sent uplink message based on the security algorithm, to obtain a security-protected uplink message, and send the security-protected uplink message to the network device. After the network device activates security protection between the network device and the terminal device based on the security algorithm and the security key, the network device may perform integrity check and decryption on the received security-protected uplink message based on the security algorithm. The method procedure shown in FIG. 5 further includes the following steps.

S530: The network device receives the security-protected uplink message from the terminal device.

For example, the security-protected uplink message in this embodiment includes but is not limited to a NAS message, an RRC message, or a UP message.

S540: The network device performs integrity check and decryption on the security-protected uplink message.

Specifically, because the network device activates security protection between the network device and the terminal device based on the security algorithm and the security key, the network device performs integrity verification on the uplink message by using the security key as an input key of the part for integrity protection in the security algorithm, and decrypts the uplink message by using the security key as an input key of the part for confidentiality protection in the security algorithm.

It should be understood that, in this embodiment, using the security key as the input key of the part for integrity protection in the security algorithm represents that the security key is not a derived key but the input key of the part for integrity protection. Similarly, in this embodiment, using the security key as the input key of the part for confidentiality protection in the security algorithm represents that the security key is not a derived key but the input key of the part for confidentiality protection.

For example, that the network device performs integrity verification on the uplink message by using the security key as the input key of the part for integrity protection in the security algorithm includes: The network device performs integrity check on the uplink message based on a plaintext parameter carried in the uplink message.

That the network device decrypts the uplink message by using the security key as the input key of the part for confidentiality protection in the security algorithm includes: The network device decrypts, by using the security key as the input key of the part for confidentiality protection in the security algorithm, ciphertext carried in the uplink message.

For ease of understanding, an example in which the security algorithm is the AEAD algorithm is used for description. The network device obtains the corresponding security key (namely, an AEAD key) based on the security algorithm. In addition, the network device uses the plaintext parameter (AAD), the ciphertext, and the AEAD key that are carried in the uplink message as input of the part for integrity protection in the AEAD algorithm, to obtain a MAC value; and determines whether the MAC is consistent with a MAC value carried in the uplink message, to determine whether the MAC value carried in the uplink message is correct.

When the integrity check succeeds (that is, the MAC value carried in the uplink message is correct), the network device decrypts, by using the security key and the security algorithm, the ciphertext carried in the uplink message.

For example, the security-protected uplink message in this embodiment is a security-protected uplink message transmitted after the network device sends a security mode command message to the terminal device. For example, the security-protected uplink message may be a security mode response message (for example, a security mode complete message).

An SMC procedure is performed between the network device and the terminal device in the following several possible manners:

Manner 1: Perform, based on the determined security algorithm, security protection on the security mode command message sent by the network device to the terminal device.

In the case shown in Manner 1, the network device performs security protection on the to-be-sent security mode command message based on the security algorithm, where the to-be-sent security mode command message includes a first parameter and a second parameter. The network device sends a security-protected security mode command message to the terminal device, where the security-protected security mode command message includes first ciphertext, first message authentication code MAC, and the first parameter, the first ciphertext is obtained by performing confidentiality protection (for example, encryption) on the second parameter based on the security algorithm, and the first MAC is obtained by performing integrity protection calculation on the first parameter and the first ciphertext based on the security algorithm. For specific content of the first ciphertext, the first message authentication code MAC, the first parameter, and the second parameter, refer to an embodiment shown in FIG. 6.

Correspondingly, after receiving the security-protected security mode command message, the terminal device performs integrity check and decryption on the security-protected security mode command message based on the security algorithm. Specifically, the terminal device performs integrity verification on the security-protected security mode command message by using the security key as an input key of the part for integrity protection in the security algorithm, and decrypts the security-protected security mode command message by using the security key as an input key of the part for confidentiality protection in the security algorithm.

For ease of understanding, the SMC procedure performed between the network device and the terminal device in the case shown in Manner 1 is described in detail below with reference to FIG. 6. Details are not described herein.

Manner 2: Perform, based on the part for integrity protection in the determined security algorithm, integrity protection on the security mode command message sent by the network device to the terminal device; or perform, based on a first integrity security protection algorithm further determined based on the determined security algorithm, integrity protection on the security mode command message sent by the network device to the terminal device.

In the case shown in Manner 2, the network device performs integrity protection on the to-be-sent security mode command message by using the security key as an input key of the part for integrity protection; or the network device determines the first integrity security protection algorithm based on the security algorithm, and performs integrity protection on the to-be-sent security mode command message based on the first integrity security protection algorithm. The network device sends an integrity-protected security mode command message to the terminal device, where the integrity-protected security mode command message includes an identifier of the security algorithm.

Correspondingly, after receiving the integrity-protected security mode command message, the terminal device performs integrity check and decryption on the integrity-protected security mode command message based on the part for integrity protection in the security algorithm. Specifically, integrity verification is performed on the integrity-protected security mode command message by using the security key as the input key of the part for integrity protection in the security algorithm.

Alternatively, after receiving the integrity-protected security mode command message, the terminal device determines the first integrity security protection algorithm, and performs integrity check and decryption on the integrity-protected security mode command message based on the first integrity security protection algorithm. Specifically, integrity verification is performed on the integrity-protected security mode command message by using the security key as an input key of the first integrity security protection algorithm.

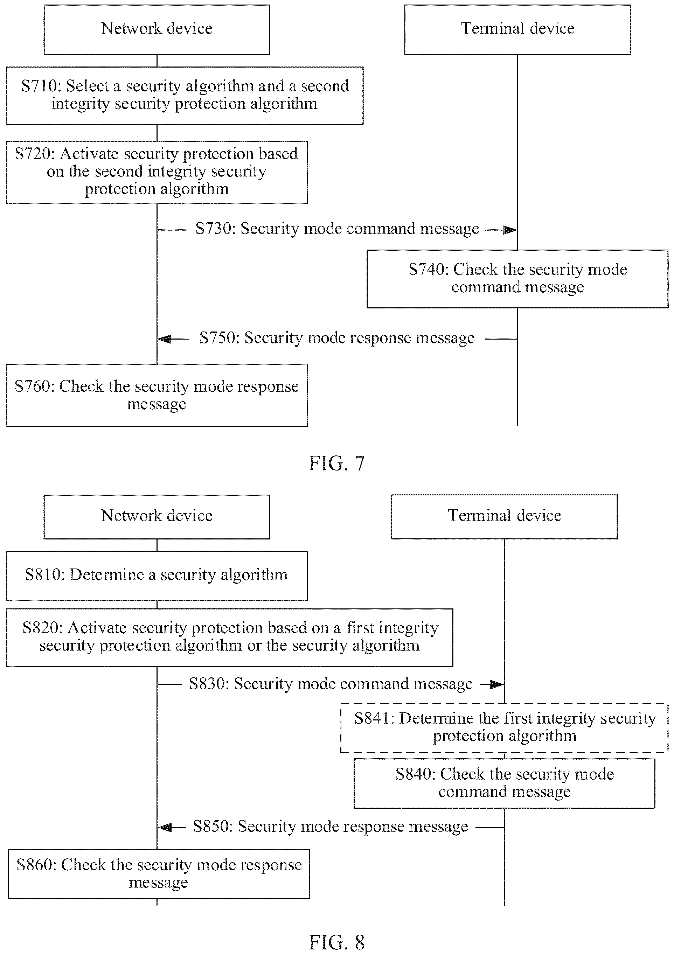

For ease of understanding, the SMC procedure performed between the network device and the terminal device in the case shown in Manner 1 is described in detail below with reference to FIG. 8. Details are not described herein.

Manner 3: Perform, based on a second integrity security protection algorithm, integrity protection on the security mode command message sent by the network device to the terminal device. In the case shown in Manner 3, the network device may determine the second integrity security protection algorithm and the security algorithm.

In the case shown in Manner 3, the network device determines the second integrity security protection algorithm, and performs integrity protection on the to-be-sent security mode command message based on the second integrity security protection algorithm. The network device sends an integrity-protected security mode command message to the terminal device, where the integrity-protected security mode command message includes an identifier of the security algorithm and an identifier of the second integrity security protection algorithm.

Correspondingly, after receiving the integrity-protected security mode command message, the terminal device performs integrity verification on the integrity-protected security mode command message based on the second integrity security protection algorithm.

For ease of understanding, the SMC procedure performed between the network device and the terminal device in the case shown in Manner 3 is described in detail below with reference to FIG. 7. Details are not described herein.

Manner 4: Perform, based on a third integrity security protection algorithm, integrity protection on the security mode command message sent by the network device to the terminal device. In the case shown in Manner 4, the security algorithm is determined based on the third integrity security protection algorithm.

In the case shown in Manner 4, the network device determines the third integrity security protection algorithm, and performs integrity protection on the to-be-sent security mode command message based on the third integrity security protection algorithm. The network device sends an integrity-protected security mode command message to the terminal device, where the integrity-protected security mode command message includes an identifier of the third integrity security protection algorithm and second indication information, and the second indication information indicates that security protection is performed, based on the security algorithm, on a message transmitted after the security mode command message.

Correspondingly, after receiving the integrity-protected security mode command message, the terminal device performs integrity verification on the integrity-protected security mode command message based on the third integrity security protection algorithm, and determines, based on the second indication information, to perform security protection on the to-be-sent uplink message based on the security algorithm further determined based on the third integrity security protection algorithm.

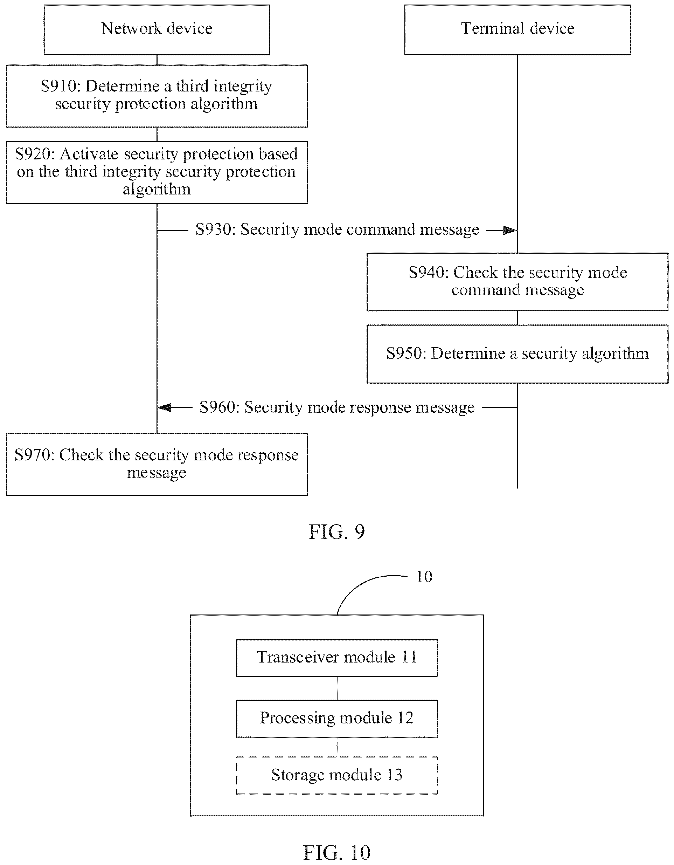

For ease of understanding, the SMC procedure performed between the network device and the terminal device in the case shown in Manner 4 is described in detail below with reference to FIG. 9. Details are not described herein.

FIG. 6 is a schematic flowchart of another communication method according to this application. In the communication method, a network device determines a security algorithm that can implement both confidentiality security protection and integrity security protection, and after determining the security algorithm, activates the security algorithm to perform security protection on a downlink message. The downlink message includes a security mode command message, so that some parameters in the security mode command message may be transmitted through the security mode command message under confidentiality protection, thereby improving security. In addition, the network device and a terminal device may negotiate to use the security algorithm to perform security protection on a to-be-transmitted message (for example, the security mode command message, or a message subsequently to be transmitted after the security mode command message), thereby avoiding a security risk in a combination of a confidentiality security protection algorithm and an integrity security protection algorithm. For example, in this solution, when confidentiality security protection and integrity security protection are performed on a message, security protection does not need to be separately performed based on the confidentiality security protection algorithm and the integrity security protection algorithm, and both confidentiality security protection and integrity security protection are performed on the message based on the security algorithm, so as to avoid splicing between different algorithms, thereby avoiding a security risk in a combination of the confidentiality security protection algorithm and the integrity security protection algorithm.

If the network device performs confidentiality and integrity security protection based on the security algorithm, a security mode command message sent by the network device carries first ciphertext obtained by performing confidentiality based on the security algorithm and first MAC obtained by performing integrity security protection based on the authenticated encryption algorithm.

The first ciphertext in the following embodiment is ciphertext obtained by performing confidentiality based on the security algorithm.

Specifically, the first ciphertext is ciphertext obtained by performing confidentiality based on a part for algorithm confidentiality in the security algorithm. A parameter on which confidentiality is performed based on the security algorithm in the security mode command message is referred to as a second parameter, that is, the first ciphertext is ciphertext obtained by performing confidentiality on the second parameter based on the security algorithm. The second parameter may also be referred to as an input parameter of the part for algorithm confidentiality protection in the security algorithm, a parameter on which confidentiality is to be performed based on the security algorithm, or the like.

It should be understood that the second parameter may be a parameter that has a high security requirement in the security mode command message. Confidentiality protection (for example, encryption) is performed on the second parameter based on the security algorithm, so that security of transmission of the second parameter can be improved.

Specifically, the second parameter includes one or more of the following information: an EPS security algorithm, an international mobile station equipment identity and software version number IMEISV request indication, or the like.

Optionally, if the security mode command message independently carries a security protection algorithm corresponding to an RRC message and a security protection algorithm corresponding to a user plane message, the security protection algorithm corresponding to the user plane message may also be used as a parameter on which confidentiality protection is performed based on the security algorithm in the security mode command message, that is, the second parameter may further include an identifier of the security protection algorithm corresponding to the user plane message. For example, if the security protection algorithm that corresponds to the user plane message and that is selected by the network device includes a confidentiality security protection algorithm and an integrity security protection algorithm, the second parameter may further include an identifier of the confidentiality security protection algorithm and an identifier of the integrity security protection algorithm that correspond to the user plane message. The security protection algorithm corresponding to the user plane message may also be referred to as a security protection algorithm corresponding to a user plane. Similarly, the security protection algorithm corresponding to the RRC message may also be referred to as a security protection algorithm corresponding to RRC.

It should be understood that, for the AEAD algorithm shown in FIG. 2, the second parameter is input as a plaintext part to a part for confidentiality protection in the algorithm, so that output ciphertext is the first ciphertext.

The first MAC in the following embodiment is obtained by performing integrity security protection based on the security algorithm.

Specifically, the first MAC is obtained by performing integrity security protection on the first parameter and the first ciphertext based on the security algorithm. The first parameter is a parameter on which integrity security protection is performed in the security mode command message, or a parameter on which confidentiality is not performed in the security mode command message. The first parameter is specifically a parameter on which integrity security protection is to be performed based on the security algorithm, and may also be referred to as an input parameter other than the first ciphertext in a part for algorithm integrity security protection in the security algorithm.

It should be understood that the first parameter is a parameter required by the terminal device to perform security check. Therefore, the first parameter is carried in the security mode command message in a plaintext manner and transferred to the terminal device, so that the terminal device can perform security check on the security mode command message based on the first parameter. Integrity security protection instead of confidentiality security protection is performed on the first parameter, so that it can be ensured that the terminal device can obtain sufficient information for security check while security is improved.

The first parameter includes one or more of the following: an identifier of the security algorithm, replayed terminal device security capability information, change indication information of a first key, a key identifier of the first key, or the like. The first key is used to determine a security key. For example, the first key is the foregoing security key, or the first key is used to derive the foregoing security key.

For example, a parameter specifically included in the first parameter may be agreed on by the terminal device and the network element in advance. For example, it is preconfigured in advance by using a standard or a protocol that the first parameter includes the identifier of the security algorithm and the change indication information of the first key.

The identifier of the security algorithm identifies an algorithm for security protection. After receiving the identifier of the security algorithm, the terminal device selects the corresponding security algorithm, and performs security check on the security mode command message. Security check includes integrity check and decryption.

The replayed terminal device security capability information is used by the terminal device to discover whether a security capability of the terminal device is tampered with. For example, the terminal device compares whether terminal device security capability information sent by the terminal device is consistent with the received replayed terminal device security capability information. In a case of consistency, the terminal device determines that the received message is not tampered with. In a case of inconsistency, the terminal device determines that the received message is tampered with. Subsequently, the terminal device may select to reselect a cell or re-initiate a registration procedure. This is not limited in this application.

The key identifier of the first key identifies a first key generated in a primary authentication process, for example, identifies Kamf. The terminal device searches for corresponding Kamf based on received ngKSI. The key generated in the primary authentication process is used as a part of a security context. For example, the first key is a NAS key in a NAS security context.

The change indication information of the first key identifies that a new key needs to be calculated. For example, a Kamf change indication identifies that new Kamf needs to be calculated.

Optionally, if the security mode command message independently carries a security protection algorithm corresponding to an RRC message and a security protection algorithm corresponding to a user plane message, the security protection algorithm corresponding to the user plane message may also be used as a parameter on which integrity security protection is performed in the security mode command message, that is, the first parameter may further include an identifier of the security protection algorithm corresponding to the user plane message. For example, if the security protection algorithm that corresponds to the user plane message and that is selected by the network device includes a confidentiality security protection algorithm and an integrity security protection algorithm, the first parameter further includes an identifier of the confidentiality security protection algorithm and an identifier of the integrity security protection algorithm that correspond to the user plane message.

It should be understood that, for the AEAD algorithm shown in FIG. 2, the first parameter is input as an AAD part to a part for integrity security protection in the algorithm, and the first ciphertext is also input to the part for integrity security protection, to output the first MAC.

Specifically, the communication method includes the following steps.

S610: The network device determines the security algorithm.

In this embodiment, the network device may perform security protection on a to-be-sent security mode command message based on the determined security algorithm. Therefore, in this embodiment, the network device may determine the security algorithm before sending the security mode command message. For a specific manner of determining the security algorithm, refer to the descriptions of step S510 in the embodiment shown in FIG. 5. Details are not described herein again.

S620: The network device activates security protection between the network device and the terminal device based on the security algorithm and the security key.

In this embodiment, for related descriptions of activating security protection between the network device and the terminal device by the network device based on the security algorithm and the security key, refer to the descriptions of step S520 in the embodiment shown in FIG. 5. Details are not described herein again.

Specifically, in this embodiment, the network device activates security protection between the network device and the terminal device, and obtains, based on the security algorithm, the confidentiality-protected first ciphertext and the first message authentication code MAC used for integrity security protection.

For example, that the network device obtains the confidentiality-protected first ciphertext based on the security algorithm includes: The network device performs confidentiality protection on the second parameter by using the security key as an input key of the part for confidentiality protection in the security algorithm, to obtain the first ciphertext. The second parameter is an input parameter of the part for confidentiality protection in the security algorithm, and the second parameter may be a parameter that has a high security requirement in the security mode command message. The security key may be a key generated in the primary authentication process. For descriptions of the second parameter and the security key, refer to the foregoing descriptions. Details are not described herein again.

For example, if the security algorithm is an AEAD algorithm, the second parameter is plaintext that is input to a part for confidentiality protection in the AEAD algorithm, the security key is an AEAD key, and the first ciphertext is output of the part for confidentiality protection in the AEAD algorithm.

For example, that the network device obtains, based on the security algorithm, the first MAC used for integrity security protection includes: The network device performs integrity on the first parameter and the first ciphertext by using the security key as an input key of the part for integrity protection in the security algorithm, to obtain the first MAC. The first parameter is an input parameter of the part for integrity security protection in the security algorithm, and the first parameter may be a parameter on which integrity security protection is performed in the security mode command message.

For example, if the security algorithm is an AEAD algorithm, the second parameter is plaintext that is input to a part for confidentiality protection in the AEAD algorithm, the first parameter is AAD that is input to a part for integrity security protection in the AEAD algorithm, the security key is an AEAD key, the first ciphertext is output of the part for confidentiality protection in the AEAD algorithm, the first ciphertext is also input of the part for integrity protection in the AEAD algorithm, and the first MAC is output of the part for integrity protection in the AEAD algorithm.

S630: The network device sends the security mode command message to the terminal device.

The security mode command message in this embodiment is a security-protected security mode command message based on the security algorithm. For ease of description, the security-protected security mode command message is referred to as a security mode command message for short in this embodiment.

Specifically, the security mode command message carries the first ciphertext, the first MAC, and the first parameter.

In a possible implementation, if the network device is an AMF, the security mode command message is a NAS SMC. For example, if the security mode command message is a NAS SMC, the first parameter carried in the NAS SMC may be information such as ngKSI, a replayed UE security capability, or a Kamf change indication. ngKSI is understood as the key identifier of the first key in the first parameter, the replayed UE security capability is understood as the replayed terminal device security capability information in the first parameter, and the Kamf change indication is understood as the change indication information of the first key in the first parameter.

In another possible implementation, if the network device is an access network device, the security mode command message is an AS SMC.

In this implementation, if security protection algorithms of an RRC message and a UP message are independent, the AS SMC includes the security protection algorithm corresponding to the selected RRC message and the security protection algorithm corresponding to the selected UP message.

For example, the security protection algorithm that is for protecting the UP message and that is selected by the access network device is an integrity security protection algorithm and a confidentiality security protection algorithm, and an identifier of an integrity security protection algorithm and an identifier of a confidentiality security protection algorithm that correspond to the UP message may be carried in the AS SMC as a part of the first ciphertext, or the identifier of the integrity security protection algorithm and the identifier of the confidentiality security protection algorithm that correspond to the UP message may be carried in the AS SMC as a part of the first parameter.

Optionally, a header of the security mode command message carries a first packet header type indication, and the first packet header type indication indicates that security protection is performed on the security mode command message based on the authenticated encryption algorithm (for example, the AEAD algorithm). For example, the first packet header type indication may reuse an existing packet header type indication information field (for example, a security header type information element in a NAS message), but another value is selected, for example, 0101. The first packet header type may alternatively be additional indication information, and an additional bit is used for indication.

Optionally, the security mode command message header carries first indication information, and the first indication information indicates a length of the first parameter and/or indicates a location of the first parameter in the security mode command message. The first indication information may also be used as a part of the first parameter.

For example, the length of the first parameter is 16 bits, a bit 1 to a bit 16 in a payload of the security mode command message are the first parameter, and values after the bit 16 are the first ciphertext and the first MAC part.

Optionally, after the network device sends the security mode command message, the network device may activate security protection of an uplink message based on the security algorithm. The uplink message includes a message received from the terminal device, and security protection of the uplink message based on the security algorithm includes performing decryption and integrity check on the received uplink message based on the security algorithm.

S640: The terminal device checks the security mode command message.

After receiving the security mode command message, the terminal device may perform security check on the security mode command message based on the first parameter carried in the security mode command message. Security check includes but is not limited to integrity check, decryption, and/or anti-replay check.

For example, the first parameter includes the identifier of the security algorithm. That the terminal device performs security check on the security mode command message based on the first parameter includes: The terminal device performs security check on the security mode command message based on the security algorithm.

Specifically, that the terminal device performs security check on the security mode command message based on the security algorithm includes: The terminal device performs integrity check and decryption on the security mode command message based on the security algorithm.

For ease of understanding, an example in which the security algorithm is the AEAD algorithm is used for description. The terminal device obtains the corresponding security key (namely, an AEAD key) based on the security algorithm. In addition, the terminal device uses the first parameter (AAD), the first ciphertext, and the AEAD key as input of the part for integrity protection in the AEAD algorithm to obtain a MAC value; and determines whether the first MAC is consistent with the MAC, to determine whether the first MAC is correct.

When the integrity check succeeds (that is, the first MAC is correct), the terminal device decrypts the first ciphertext by using the security key and the security algorithm.

Optionally, the first parameter further includes the key identifier of the first key. In this case, the terminal device may determine the first key based on the key identifier of the first key, where the first key may be the foregoing security key; and perform integrity check and decryption on the security mode command message based on the security key and the security algorithm. For a specific manner of integrity check and decryption, refer to the foregoing descriptions. Details are not described herein again.

Optionally, the first parameter further includes the change indication information of the first key. In this case, the terminal device may determine, based on the change indication information of the first key, to perform key derivation. Specifically, after determining the first key, the terminal device performs key derivation on the first key to obtain the security key, and performs integrity check and decryption on the security mode command message based on the security key and the security algorithm. For a specific manner of integrity check and decryption, refer to the foregoing descriptions. Details are not described herein again.

Optionally, the first parameter further includes the replayed terminal device security capability information. In addition to performing integrity check and decryption on the security mode command message based on the security algorithm, the terminal device may compare whether the terminal device security capability information sent by the terminal device is consistent with the received replayed terminal device security capability information. In a case of consistency, the terminal device determines that the received message is not tampered with. In a case of inconsistency, the terminal device determines that the received message is tampered with.

For example, when the security check of the terminal device succeeds (for example, the integrity check succeeds, or both the integrity check and the decryption succeed), the terminal device stores a security context. The security context includes the security algorithm, that is, the security algorithm is used as a part of the security context.

It should be noted that, if the network device is an AMF, the security context stored by the terminal device is a NAS security context; or if the network device is an access network device, the security context stored by the terminal device is an AS security context.

It can be learned from the foregoing descriptions that, if the network device is an access network device, and an RRC message and a UP message may use different security protection algorithms, the AS security context stored by the terminal device includes both a security protection algorithm (that is, a security algorithm) corresponding to the RRC message and a security protection algorithm (that is, a security protection algorithm selected by the access network device for the UP message, for example, a confidentiality security protection algorithm and/or an integrity security protection algorithm) corresponding to the UP message. In other words, when the network device is an access network device, the AS security context stored by the terminal device includes an RRC security context and a UP security context.

For example, when the security mode command message carries the first packet header type indication, the terminal device may determine, based on the first packet header type indication, whether to use the security algorithm.

For example, when a header of the security mode command message includes the first packet header type indication, and the security algorithm carried in the security mode command message is a security algorithm, the terminal device determines to use the security algorithm to perform security verification and security protection of a subsequent message.

For another example, when a header of the security mode command messageincludes the first packet header type indication, and the security algorithm carried in the security mode command message is not an authenticated encryption algorithm, the terminal device discards the security mode command message.

For example, when the security mode command message carries the first indication information, the terminal device may obtain the first parameter from the security mode command message based on the first indication information.

When the security check in step S640 succeeds, the terminal device activates integrity security protection and confidentiality security protection of an uplink message based on the security algorithm. The uplink message includes a message sent to the network device, and security protection of the uplink message based on the security algorithm includes performing confidentiality and integrity security protection on the to-be-sent uplink message based on the security algorithm.

Optionally, the terminal device may further send a security mode response message to the network device. The security mode response message includes a security mode complete message or a security mode failure message.

S650: The terminal device sends the security mode response message to the network device.

The security mode command message in this embodiment is a security-protected security mode response message based on the security algorithm. For ease of description, the security-protected security mode response message is referred to as a security mode response message for short in this embodiment.

When the security check in step S640 succeeds, the terminal device sends the security mode complete message to the network device.

When the security check in step S640 fails, the terminal device sends the security mode failure message to the network device.

For example, the terminal device performs integrity security protection and confidentiality security protection on an information element in the security mode response message based on the security algorithm, for example, performs confidentiality on some information elements in the security mode response message based on the security algorithm to obtain second ciphertext, and performs integrity security protection on some information elements in the security mode response message based on the security algorithm to obtain second MAC.

In this embodiment, the second MAC is obtained by performing integrity security protection on the first parameter and the first ciphertext based on the security algorithm. For related descriptions of the first parameter, refer to the foregoing descriptions. Details are not described herein again. The second ciphertext is ciphertext obtained by performing confidentiality on the second parameter in the part for algorithm confidentiality in the security algorithm. For related descriptions of the second parameter, refer to the foregoing descriptions. Details are not described herein again.

Then, the terminal device sends the security mode response message to the network device, where the security mode response message carries the second MAC and the second ciphertext.

Optionally, a header the security mode response message carries a second packet header type indication, and the second packet header type indication indicates that security protection is performed on the security mode response message based on the authenticated encryption algorithm (for example, the AEAD algorithm).

For example, the network device receives the security mode response message, and the network device performs integrity check and decryption on an information element in the security mode response message based on the security algorithm.

S660: The network device checks the security mode response message.

For a specific security check manner, refer to the manner in which the network device performs integrity check and decryption on the uplink message in step S540. Details are not described herein again.

As described above, in this embodiment, the network device may activate security protection of the uplink message after sending the security mode command message. In addition, in this embodiment, the network device may activate security protection of the uplink message after receiving the security mode response message. For example, when receiving the security mode complete message of the terminal device, the network device may activate security protection of the uplink message based on the security algorithm. The uplink message includes the message (for example, the security mode response message) received from the terminal device, and security protection of the uplink message based on the security algorithm includes performing decryption and integrity check on the received uplink message based on the security algorithm.

This application further provides another communication method. A network device may select a second integrity security protection algorithm and a security algorithm that can implement both confidentiality security protection and integrity security protection. The second integrity security protection algorithm is used to perform integrity security protection on a to-be-transmitted security mode command message, and the security algorithm is used to implement confidentiality and integrity security protection on a message transmitted after the security mode command message.

In the communication method, after selecting the security algorithm, the network device does not immediately activate the security algorithm, but includes an identifier of the security algorithm in the security mode command message, so that the network device and a terminal device can negotiate, by using the identifier of the security algorithm that is carried in the security mode command message, a security protection manner of the message transmitted after the security mode command message. In the communication method, the security algorithm is used to perform security protection on the message subsequently transmitted between the network device and the terminal device, thereby avoiding a security risk in a combination of a confidentiality security protection algorithm and an integrity security protection algorithm.

The following describes the communication method in detail with reference to FIG. 7. FIG. 7 is a schematic flowchart of still another communication method according to this application. The method includes the following steps.

S710: A network device selects a security algorithm and a second integrity security protection algorithm.

For a first algorithm priority list, an integrity security protection algorithm priority list, and a confidentiality security protection algorithm priority list that are locally configured on the network device in this embodiment, refer to the descriptions of the algorithm priority lists locally configured on the network device in step S510 in the communication method shown in FIG. 5. Details are not described herein again.

A difference from step S510 is that, in this embodiment, in a process of selecting the security algorithm, the network device not only selects the security algorithm that can implement both confidentiality security protection and integrity security protection, but also selects the second integrity security protection algorithm.

For example, the network device not only obtains the security algorithm based on the security algorithm selection logic shown in step S510, but also selects an integrity security protection algorithm based on security capability information of a terminal device.

It should be understood that, in this embodiment, how the network device selects the second integrity security protection algorithm is not limited. For details, refer to a selection manner of selecting an integrity security protection algorithm by the network device in the conventional technology. Details are not described herein again.

It should be further understood that, in this embodiment, the second integrity security protection algorithm selected by the network device is used for security protection of a security mode command message, and the security algorithm is used for integrity security protection and confidentiality security protection of a subsequent message of the security mode command message.

S720: The network device activates security protection based on the second integrity security protection algorithm.

Specifically, the network device activates security protection of a downlink message based on the second integrity security protection algorithm, and temporarily does not activate security protection of the downlink message based on the security algorithm.

Specifically, that the network device activates security protection based on the second integrity security protection algorithm includes: configuring the second integrity security protection algorithm and a key corresponding to the second integrity security protection algorithm.

Further, the network device obtains, based on the second integrity security protection algorithm, fourth MAC used for integrity security protection. For example, the network device performs integrity security protection on some or all information elements in the security mode command message.

For example, if the network device is an AMF, for related descriptions of step S720, refer to the descriptions of step S320 in the communication method shown in FIG. 3. Details are not described herein again.

For example, if the network device is an access network device, for related descriptions of step S720, refer to the descriptions of step S420 in the communication method shown in FIG. 4. Details are not described herein again.

S730: The network device sends a security mode command message to the terminal device.

The security mode command message in this embodiment is an integrity-protected security mode command message based on the second integrity security protection algorithm. For ease of description, the integrity-protected security mode command message is referred to as a security mode command message for short in this embodiment.

Optionally, if the network device is an AMF, the security mode command message is a NAS SMC.

Optionally, if the network device is an access network device, the security mode command message is an AS SMC.

The security mode command message includes an identifier of the security algorithm, an identifier of the second integrity security protection algorithm, and the fourth MAC.

It should be noted that the identifier of the security algorithm that is carried in the security mode command message is subsequently used as a part of a security context, and the second integrity security protection algorithm is used to protect the security mode command message, that is, the second integrity security protection algorithm is a temporary security context or is not used as a part of the security context.

For example, if the network device is an AMF, for information included in the security mode command message other than the identifier of the security algorithm, refer to the descriptions of the information included in the NAS SMC message in step S330 in the communication method shown in FIG. 3. Details are not described herein again.

For example, if the network device is an access network device, for information included in the security mode command message other than the identifier of the security algorithm, refer to the descriptions of the information included in the AS SMC message in step S430 in the communication method shown in FIG. 4. For example, if security protection algorithms corresponding to an RRC message and a UP message are shared, the AS SMC may carry the identifier of the security algorithm and the identifier of the second integrity security protection algorithm. For another example, if security protection algorithms of an RRC message and a UP message are independent, the AS SMC includes the identifier of the second integrity security protection algorithm and an identifier of a security algorithm corresponding to the RRC message, and the AS SMC further includes an identifier of a confidentiality security protection algorithm corresponding to the UP message, an identifier of an integrity security protection algorithm corresponding to the UP message, or an identifier of an authenticated encryption algorithm corresponding to the UP message.

Optionally, the security mode command message further includes a third parameter required by the terminal device to perform integrity check. The third parameter is a parameter on which integrity security protection is performed in the security mode command message, or a parameter on which confidentiality is not performed in the security mode command message. The third parameter is specifically a parameter on which integrity security protection is to be performed based on the second integrity security protection algorithm. It should be understood that the third parameter is a parameter required by the terminal device to perform security check. Therefore, the second plaintext parameter is carried in the security mode command message in a plaintext manner and transferred to the terminal device, so that the terminal device can perform security check on the security mode command message based on the third parameter. Integrity security protection instead of confidentiality security protection is performed on the third parameter, so that it can be ensured that the terminal device can obtain sufficient information for security check while security is improved. For example, if security protection algorithms of an RRC message and a UP message are independent, an identifier of a security algorithm corresponding to the RRC message, an identifier of a confidentiality security protection algorithm corresponding to the UP message, an identifier of an integrity security protection algorithm corresponding to the UP message, or an identifier of an authenticated encryption algorithm corresponding to the UP message may be used as content of the third parameter.

Optionally, after the network device sends the security mode command message, the network device may activate security protection of an uplink message based on the security algorithm. The uplink message includes a message received from the terminal device, and security protection of the uplink message based on the security algorithm includes performing decryption and integrity check on the received uplink message based on the security algorithm. Specifically, for related descriptions of performing security protection on the uplink message by the network device based on the security algorithm, refer to the manner in which the terminal device checks the security mode command message in the embodiment shown in FIG. 6. Details are not described herein again.

S740: The terminal device checks the security mode command message.

For example, if the network device is an AMF, for a manner in which the terminal device checks the security mode command message, refer to the descriptions in which the UE checks the NAS SMC message in step S350 in the communication method shown in FIG. 3. Details are not described herein again.

For example, if the network device is an access network device, for a manner in which the terminal device checks the security mode command message, refer to the descriptions in which the UE checks the AS SMC message in step S450 in the communication method shown in FIG. 4. Details are not described herein again.

When the check succeeds, the terminal device stores the security algorithm as a part of the security context.

Optionally, after the check is completed, the terminal device deletes or does not store the second integrity security protection algorithm.

For example, the security mode command message is an AS SMC message, and an RRC message and a UP message share a security protection algorithm (for example, share a security algorithm). The AS SMC message includes the security protection algorithms corresponding to the RRC message and the UP message. After completing check based on the second integrity security protection algorithm, the terminal device stores the security algorithm in an RRC security context and a UP security context, and deletes or does not store the second integrity security protection algorithm.

For another example, the security mode command message is an AS SMC message, and security protection algorithms of an RRC message and a UP message are independent. The AS SMC message includes the security protection algorithm (for example, a security algorithm) corresponding to the RRC message and the security protection algorithm (for example, at least one of an authenticated encryption algorithm #1, an integrity security protection algorithm #1, or a confidentiality security protection algorithm #1) corresponding to the UP message. After completing check based on the second integrity security protection algorithm, the terminal device stores the security algorithm in an RRC security context, deletes or does not store the second integrity security protection algorithm, and stores the security protection algorithm corresponding to the UP message (for example, stores at least one of the authenticated encryption algorithm #1, the integrity security protection algorithm #1, or the confidentiality security protection algorithm #1) in a UP security context.

For another example, the security mode command message is a NAS SMC message. After completing check based on the second integrity security protection algorithm, the terminal device stores the security algorithm in a NAS security context, and deletes or does not store the second integrity security protection algorithm.

When the security check in step S740 succeeds, the terminal device activates integrity security protection and confidentiality security protection of an uplink message based on the security algorithm. The uplink message includes a message sent to the network device, and security protection of the uplink message based on the security algorithm includes performing confidentiality and integrity security protection of the to-be-sent uplink message based on the security algorithm.

S750: The terminal device sends a security mode response message to the network device.

For related descriptions of sending the security mode response message by the terminal device to the network device in this embodiment, refer to the descriptions of sending the security mode response message by the terminal device to the network device in the communication method shown in FIG. 6. Details are not described herein again.

For example, the network device receives the security mode response message, and the network device performs integrity check and decryption on an information element in the security mode response message based on the security algorithm.

S760: The network device checks the security mode response message.

For a specific security check manner, refer to the manner in which the terminal device performs security check on the security mode command message in step S640. Details are not described herein again.

As described above, in this embodiment, the network device may activate security protection of the uplink message after sending the security mode command message. In addition, in this embodiment, the network device may activate security protection of the uplink message after receiving the security mode response message. For example, when receiving a security mode complete message of the terminal device, the network device may activate security protection of the uplink message based on the security algorithm. The uplink message includes a message (for example, the security mode response message) received from the terminal device, and security protection of the uplink message based on the security algorithm includes performing decryption and integrity check on the received uplink message based on the security algorithm.

This application further provides another communication method. A network device may select a security algorithm that can implement both confidentiality security protection and integrity security protection. The security algorithm is used to implement confidentiality and integrity security protection on a message transmitted after a security mode command message. A first integrity security protection algorithm for performing integrity security protection on the to-be-transmitted security mode command message is determined based on the security algorithm. Therefore, the network device may select the security algorithm when selecting a security protection algorithm, then determine the first integrity security protection algorithm based on the selected security algorithm, and perform integrity security protection on the to-be-transmitted security mode command message based on the first integrity security protection algorithm.

In the communication method, after selecting the security algorithm, the network device includes an identifier of the security algorithm in the security mode command message, so that the network device and a terminal device can negotiate, by using the identifier of the security algorithm that is carried in the security mode command message, a security protection manner of the message transmitted after the security mode command message.

In the communication method, the security algorithm is used to perform security protection on the message subsequently transmitted between the network device and the terminal device, thereby avoiding a security risk in a combination of a confidentiality security protection algorithm and an integrity security protection algorithm. Further, in this technical solution, the security mode command message sent by the network device only needs to include the identifier of the security algorithm, and does not need to carry an identifier of the first integrity security protection algorithm. This is because the terminal device may determine the first integrity security protection algorithm based on the security algorithm. This can reduce signaling overheads.

The following describes the communication method in detail with reference to FIG. 8. FIG. 8 is a schematic flowchart of still another communication method according to this application. The method includes the following steps.

S810: A network device determines a security algorithm.

For example, the network device may select the security algorithm. Specifically, for related descriptions of selecting the security algorithm, refer to the descriptions of step S510 in the communication method shown in FIG. 5. Details are not described herein again.

For example, the network device may select an integrity security protection algorithm and/or a confidentiality security protection algorithm, and determine the security algorithm based on the selected integrity security protection algorithm #1 and/or confidentiality security protection algorithm.

In this embodiment, the security algorithm determined by the network device can be used to determine a first integrity security protection algorithm.

In a possible implementation, the network device determines, as the first integrity security protection algorithm, an algorithm obtained by setting a part for confidentiality in the security algorithm to null.

In another possible implementation, the network device determines the first integrity security protection algorithm based on a correspondence and the security algorithm, where the correspondence includes a correspondence between the security algorithm and the first integrity security protection algorithm. Optionally, the correspondence may further include a correspondence between another authenticated encryption algorithm and an integrity security protection algorithm. This is not limited in this embodiment.

For example, correspondences between a plurality of integrity security protection algorithms and a plurality of authenticated encryption algorithms are: an SNOW-AEAD algorithm corresponds to an SNOW integrity security protection algorithm, a ZUC-AEAD algorithm corresponds to a ZUC integrity security protection algorithm, and an AES-AEAD algorithm corresponds to an AES integrity security protection algorithm.

If the security algorithm is the SNOW-AEAD algorithm, the first integrity security protection algorithm is the SNOW integrity security protection algorithm; or if the security algorithm is the ZUC-AEAD algorithm, the first integrity security protection algorithm is the ZUC integrity security protection algorithm; or if the security algorithm is the AES-AEAD algorithm, the first integrity security protection algorithm is the AES integrity security protection algorithm.

In still another possible implementation, the network device directly uses a part for integrity protection in the security algorithm as the first integrity security protection algorithm (in other words, the network device determines to use the part for integrity protection in the security algorithm). For example, the network device considers all information elements of a security mode command message as input of the part for integrity protection in the security algorithm, and does not perform confidential information element transmission. In this implementation, the foregoing first integrity security protection algorithm is the security algorithm, and the security algorithm does not implement a confidentiality security protection function.

S820: The network device activates security protection based on the first integrity security protection algorithm or the security algorithm.

Specifically, the network device may activate security protection of a downlink message, for example, perform integrity security protection on the downlink message.

For example, that the network device activates security protection based on the first integrity security protection algorithm includes: configuring the first integrity security protection algorithm and a key corresponding to the first integrity security protection algorithm.

For example, that the network device activates security protection based on the security algorithm includes: configuring the security algorithm and a security key corresponding to the security algorithm.

Further, the network device performs integrity protection on a to-be-sent security mode command message by using the security key as an input key of the part for integrity protection; or the network device determines the first integrity security protection algorithm based on the security algorithm, and performs integrity protection on the to-be-sent security mode command message based on the first integrity security protection algorithm. For example, the network device obtains, based on the first integrity security protection algorithm or the part for integrity protection in the security algorithm, third MAC used for integrity security protection.

It should be understood that, for the AEAD algorithm shown in FIG. 2, the network device uses some or all information elements of the downlink message as input of an AAD part in the AEAD algorithm, and uses an AEAD key to output the third MAC. Therefore, some or all information elements of the downlink message are integrity security-protected but are not confidentiality-protected. The downlink message is specifically a security mode command message.

For example, if the network device is an AMF, for related descriptions of integrity security protection in step S820, refer to the descriptions of step S320 in the communication method shown in FIG. 3. Details are not described herein again.

For example, if the network device is an access network device, for related descriptions of integrity security protection in step S820, refer to the descriptions of step S420 in the communication method shown in FIG. 4. Details are not described herein again.

A procedure in which the network device activates security protection based on the first integrity security protection algorithm in this embodiment is similar to step S320 in which the AMF activates NAS integrity security protection in FIG. 3 or step S420 in which the access network device activates RRC integrity security protection in the communication method shown in FIG. 4. A difference is as follows:

In this embodiment, the first integrity security protection algorithm is an integrity security protection algorithm determined based on the security algorithm, or an algorithm that is in the security algorithm and whose confidentiality security protection function is not enabled. For details, refer to the descriptions in S820.

S830: The network device sends a security mode command message to a terminal device.

The security mode command message in this embodiment is an integrity-protected security mode command message based on the first integrity security protection algorithm or the security algorithm. For ease of description, the integrity-protected security mode command message is referred to as a security mode command message for short in this embodiment.

Optionally, if the network device is an AMF, the security mode command message is a NAS SMC.

Optionally, if the network device is an access network device, the security mode command message is an AS SMC.

The security mode command message includes an identifier of the security algorithm and the third MAC.

It should be noted that the identifier of the security algorithm that is carried in the security mode command message is subsequently used as a part of a security context.

For example, if the network device is an AMF, for information included in the security mode command message other than the identifier of the security algorithm, refer to the descriptions of the information included in the NAS SMC message in step S330 in the communication method shown in FIG. 3. Details are not described herein again.

For example, if the network device is an access network device, for information included in the security mode command message other than the identifier of the security algorithm, refer to the descriptions of the information included in the AS SMC message in step S430 in the communication method shown in FIG. 4. For example, if security protection algorithms corresponding to an RRC message and a UP message are shared, the AS SMC may carry the identifier of the security algorithm and an identifier of the first integrity security protection algorithm. For another example, if security protection algorithms of an RRC message and a UP message are independent, the AS SMC includes the identifier of the first integrity security protection algorithm and an identifier of a security algorithm corresponding to the RRC message, and the AS SMC further includes an identifier of a confidentiality security protection algorithm corresponding to the UP message, an identifier of an integrity security protection algorithm corresponding to the UP message, or an identifier of an authenticated encryption algorithm corresponding to the UP message.

Optionally, the security mode command message further includes a third parameter required by the terminal device to perform integrity check. For descriptions of the third parameter, refer to the descriptions of the third parameter in the communication method shown in FIG. 7. Details are not described herein again.

Optionally, after the network device sends the security mode command message, the network device may activate security protection of an uplink message based on the security algorithm. The uplink message includes a message received from the terminal device, and security protection of the uplink message based on the security algorithm includes performing decryption and integrity check on the received uplink message based on the security algorithm. Specifically, for related descriptions of performing security protection on the uplink message by the network device based on the security algorithm, refer to the manner in which the terminal device checks the security mode command message in the embodiment shown in FIG. 5. Details are not described herein again.

S840: The terminal device checks the security mode command message.

The terminal device receives the security mode command message, and performs integrity check on the security mode command message.

The terminal device determines the security algorithm based on the identifier of the security algorithm that is carried in the security mode command message. In other words, the terminal device determines that integrity protection is performed on the security mode command message based on the security algorithm (or the first integrity security protection algorithm corresponding to the security algorithm, or the part for integrity protection in the security algorithm). Further, the terminal device performs integrity check on the security mode command message based on the security algorithm (or the first integrity security protection algorithm corresponding to the security algorithm, or the part for integrity protection in the security algorithm).

In a possible implementation, the terminal device may perform integrity check on the security mode command message based on the part for integrity protection in the security algorithm. For example, integrity security protection is performed on the third MAC based on the part for integrity protection in the security algorithm.

In this implementation, the terminal device performs integrity check on the security mode command message by using the part for integrity protection in the security algorithm. The terminal device uses the security mode command message (some or all information elements of the security mode command message, such as the third parameter) and a key corresponding to the security algorithm as input of the part for integrity protection in the security algorithm. It should be understood that, for the AEAD algorithm shown in FIG. 2, the terminal device uses an AEAD key, inputs the security mode command message as input of an AAD part, to output MAC, and determines whether the third MAC is consistent with the MAC, to determine whether the third MAC is correct, thereby implementing integrity check.

For example, the terminal device may perform integrity check based on the third parameter carried in the security mode command message and the part for integrity protection in the security algorithm. In this case, the third parameter includes a parameter required for performing integrity check based on the part for integrity protection in the security algorithm. For example, the third parameter includes an identifier of the security algorithm, replayed terminal device security capability information, change indication information of a first key, or a key identifier of the first key.

In this implementation, for a manner in which the terminal device performs integrity check on the security mode command message, refer to the descriptions of performing integrity check on the security mode command message by the terminal device in step S540 in the embodiment shown in FIG. 5. For example, the security algorithm is the AEAD algorithm shown in FIG. 2, and the terminal device obtains a corresponding security key (namely, an AEAD key) based on the security algorithm. Further, the terminal device uses the third parameter (AAD) and the AEAD key as input of the part for integrity protection in the AEAD algorithm to obtain a MAC value, and determines whether the third MAC is consistent with the MAC, to determine whether the third MAC is correct, thereby implementing integrity check.

In another possible implementation, the terminal device may perform integrity check on the security mode command message based on the first integrity security protection algorithm. This implementation corresponds to the following case: The third MAC of the security mode command message is obtained by performing integrity security protection based on the first integrity security protection algorithm.

In this implementation, the terminal device determines the first integrity security protection algorithm. Specifically, the terminal device determines the security algorithm based on the identifier of the security algorithm, and further determines the first integrity security protection algorithm.

In this implementation, the method procedure shown in FIG. 8 may further include the following step:

S841: The terminal device determines the first integrity security protection algorithm.

In a possible implementation, the terminal device determines, as the first integrity security protection algorithm, an algorithm obtained by setting a part for confidentiality in the security algorithm to null.

In another possible implementation, the terminal device determines the first integrity security protection algorithm based on a correspondence and the security algorithm. For descriptions of the correspondence, refer to the descriptions in step S710. Details are not described herein again.

In still another possible implementation, the network device directly uses the security algorithm as the first integrity security protection algorithm, and performs integrity check based on the security algorithm and does not need to perform decryption.

For example, in this embodiment, for a manner in which the terminal device checks the security mode command message based on the first integrity security protection algorithm after determining the first integrity security protection algorithm, refer to a manner in which the terminal device performs integrity check in the conventional technology.

For example, if the network device is an AMF, for a manner in which the terminal device checks the security mode command message, refer to the descriptions in which the UE checks the NAS SMC message in step S350 in the communication method shown in FIG. 3. Details are not described herein again.

For another example, if the network device is an access network device, for a manner in which the terminal device checks the security mode command message, refer to the descriptions in which the UE checks the AS SMC message in step S450 in the communication method shown in FIG. 4. Details are not described herein again.

When the check succeeds, the terminal device stores the security algorithm as a part of the security context.

Optionally, after the check is completed, the terminal device deletes or does not store the first integrity security protection algorithm.

For example, the security mode command message is an AS SMC message, and an RRC message and a UP message share a security protection algorithm (for example, share a security algorithm). After completing check based on the first integrity security protection algorithm, the terminal device stores the security algorithm in an RRC security context and a UP security context, and deletes or does not store the first integrity security protection algorithm.

For another example, the security mode command message is an AS SMC message, and security protection algorithms of an RRC message and a UP message are independent. The AS SMC message includes the security protection algorithm (for example, a security algorithm) corresponding to the RRC message and the security protection algorithm (for example, at least one of an authenticated encryption algorithm #1, an integrity security protection algorithm #1, or a confidentiality security protection algorithm #1) corresponding to the UP message. After completing check based on the first integrity security protection algorithm, the terminal device stores the security algorithm in an RRC security context, deletes or does not store the first integrity security protection algorithm, and stores the security protection algorithm corresponding to the UP message (for example, stores at least one of the authenticated encryption algorithm #1, the integrity security protection algorithm #1, or the confidentiality security protection algorithm #1) in a UP security context.

For still another example, the security mode command message is a NAS SMC message. After completing check based on the first integrity security protection algorithm, the terminal device stores the security algorithm in a NAS security context, and deletes or does not store the first integrity security protection algorithm.

When the security check in step S840 succeeds, the terminal device activates integrity security protection and confidentiality security protection of an uplink message based on the security algorithm. The uplink message includes a message sent to the network device, and security protection of the uplink message based on the security algorithm includes performing confidentiality and integrity security protection on the to-be-sent uplink message based on the security algorithm.

S850: The terminal device sends a security mode response message to the network device.

For related descriptions of sending the security mode response message by the terminal device to the network device in this embodiment, refer to the descriptions of sending the security mode response message by the terminal device to the network device in the communication method shown in FIG. 5. Details are not described herein again.

S860: The network device checks the security mode response message.

For example, the network device receives the security mode response message, and the network device performs integrity check and decryption on an information element in the security mode response message based on the security algorithm. For a specific security check manner, refer to the manner in which the network device performs integrity check and decryption on the uplink message in step S540. Details are not described herein again.

As described above, in this embodiment, the network device may activate security protection of the uplink message after sending the security mode command message. In addition, in this embodiment, the network device may activate security protection of the uplink message after receiving the security mode response message. For example, when receiving a security mode complete message of the terminal device, the network device may activate security protection of the uplink message based on the security algorithm. The uplink message includes a message (for example, the security mode response message) received from the terminal device, and security protection of the uplink message based on the security algorithm includes performing decryption and integrity check on the received uplink message based on the security algorithm.

This application further provides another communication method. A network device selects a third integrity security protection algorithm, activates the third integrity security protection algorithm, and performs integrity security protection on a to-be-transmitted security mode command message based on the third integrity security protection algorithm. Further, the network device includes fifth MAC, an identifier of the third integrity security protection algorithm, and second indication information in the security mode command message, where the second indication information indicates that confidentiality and integrity security protection are performed, based on a security algorithm, on a message transmitted after the security mode command message.

The third integrity security protection algorithm can determine the security algorithm, so that the network device and a terminal device can negotiate, by using the identifier of the third integrity security protection algorithm that is carried in the security mode command message, a security protection manner of the message transmitted after the security mode command message. In this technical solution, the security algorithm is used to perform security protection on the message subsequently transmitted between the network device and the terminal device, thereby avoiding a security risk in a combination of a confidentiality security protection algorithm and an integrity security protection algorithm.

The following describes the communication method in detail with reference to FIG. 9.

FIG. 9 is a schematic flowchart of still another communication method according to this application. The method includes the following steps.

S910: A network device determines a third integrity security protection algorithm.

For example, the network device may select the third integrity security protection algorithm. Specifically, for a manner in which the network device selects the third integrity security protection algorithm, refer to a manner in which the network device selects an integrity security protection algorithm in the conventional technology.

For example, if the network device is an AMF, for a manner in which the network device selects the third integrity security protection algorithm, refer to the descriptions of selecting the integrity security protection algorithm by the AMF in step S310 in the communication method shown in FIG. 3. Details are not described herein again.

For another example, if the network device is an access network device, for a manner in which the network device selects the third integrity security protection algorithm, refer to the descriptions of selecting the integrity security protection algorithm by the access network device in step S410 in the communication method shown in FIG. 4. Details are not described herein again.

For example, the network device may select an authenticated encryption algorithm, and determine the third integrity security protection algorithm based on the selected authenticated encryption algorithm.

Optionally, in this embodiment, the network device may further select a confidentiality security protection algorithm. Details are not described herein again.

S920: The network device activates security protection based on the third integrity security protection algorithm.

Specifically, the network device may activate security protection of a downlink message, for example, perform integrity security protection on the downlink message.

For example, that the network device activates security protection based on the third integrity security protection algorithm includes: configuring the third integrity security protection algorithm and a key corresponding to the third integrity security protection algorithm. Further, the network device obtains, based on the third integrity security protection algorithm, fifth MAC used for integrity security protection.

For example, if the network device is an AMF, for a manner in which the network device activates security protection based on the third integrity security protection algorithm, refer to the descriptions of activating NAS integrity security protection in step S320 in the communication method shown in FIG. 3. Details are not described herein again.

For example, if the network device is an access network device, for a manner in which the network device activates security protection based on the third integrity security protection algorithm, refer to the descriptions of activating RRC integrity security protection in step S420 in the communication method shown in FIG. 4. Details are not described herein again.

S930: The network device sends a security mode command message to a terminal device.

The security mode command message in this embodiment is an integrity-protected security mode command message based on the third integrity security protection algorithm or a security algorithm. For ease of description, the integrity-protected security mode command message is referred to as a security mode command message for short in this embodiment.

Optionally, if the network device is an AMF, the security mode command message is a NAS SMC.

Optionally, if the network device is an access network device, the security mode command message is an AS SMC.

The security mode command message includes an identifier of the third integrity security protection algorithm, the fifth MAC, and second indication information, the second indication information indicates that confidentiality and integrity security protection are performed, based on the security algorithm, on a message transmitted after the security mode command message, and the third integrity security protection algorithm is used to determine the security algorithm.

For example, the second indication information may be a value of 1 bit. For example, when a value of the second indication information is 1, it indicates that the message after the security mode command message uses the security algorithm; or when a value of the second indication information is 0 or is not carried, it indicates that the message after the security mode command message does not use the security algorithm.

For example, the second indication information may alternatively be an identifier of a specific security algorithm. When the security mode command message carries the identifier of the security algorithm, it indicates that the message after the security mode command message uses the security algorithm; or when the security mode command message does not carry the identifier of the security algorithm, it indicates that the message after the security mode command message does not use the security algorithm.

For example, a trigger condition for the network device to determine that the message after the security mode command message uses the security algorithm may include at least one of the following conditions:
(1) In step S910, the network device selects the third integrity security protection algorithm and the confidentiality security protection algorithm, where the third integrity security protection algorithm and the confidentiality security protection algorithm are a same type of algorithms. For example, both the third integrity security protection algorithm and the confidentiality security protection algorithm are AES algorithms. For another example, both the third integrity security protection algorithm and the confidentiality security protection algorithm are SNOW algorithms.
(2) In step S910, an algorithm selection policy configured on the network device is preferentially using an authenticated encryption algorithm.

For example, if the network device is an AMF, for information included in the security mode command message other than the second indication information, refer to the descriptions of the information included in the NAS SMC message in step S330 in the communication method shown in FIG. 3. Details are not described herein again.

For example, if the network device is an access network device, for information included in the security mode command message other than the second indication information, refer to the descriptions of the information included in the AS SMC message in step S430 in the communication method shown in FIG. 4. For example, if security protection algorithms corresponding to an RRC message and a UP message are shared, the AS SMC may carry the identifier of the security algorithm and the identifier of the third integrity security protection algorithm. For another example, if security protection algorithms of an RRC message and a UP message are independent, the AS SMC includes the identifier of the third integrity security protection algorithm and a security algorithm corresponding to the RRC message, and the AS SMC further includes an identifier of a confidentiality security protection algorithm corresponding to the UP message, an identifier of an integrity security protection algorithm corresponding to the UP message, or an identifier of an authenticated encryption algorithm corresponding to the UP message.

Optionally, the security mode command message further includes a third parameter required by the terminal device to perform integrity check. For descriptions of the third parameter, refer to the descriptions of the third parameter in the communication method shown in FIG. 7. Details are not described herein again.

Optionally, after the network device sends the security mode command message, the network device may activate security protection of an uplink message based on the security algorithm. Specifically, for related descriptions of performing security protection on the uplink message by the network device based on the security algorithm, refer to the manner in which the terminal device checks the security mode command message in the embodiment shown in FIG. 5. Details are not described herein again.

In a possible implementation, after selecting the third integrity security protection algorithm, the network device determines the security algorithm based on the third integrity security protection algorithm. The uplink message includes a message received from the terminal device, and security protection of the uplink message based on the security algorithm includes performing decryption and integrity check on the received uplink message based on the security algorithm.

For example, the integrity security protection algorithm includes an AES integrity security protection algorithm, an SNOW integrity security protection algorithm, a ZUC integrity security protection algorithm, or a null integrity security protection algorithm. When the third integrity security protection algorithm is an AES integrity security protection algorithm, the security algorithm is an AES authenticated encryption algorithm; or when the third integrity security protection algorithm is an SNOW integrity security protection algorithm, the security algorithm is an SNOW integrity security protection algorithm; or when the third integrity security protection algorithm is a ZUC integrity security protection algorithm, the security algorithm is a ZUC authenticated encryption algorithm; or when the third integrity security protection algorithm is a null integrity security protection algorithm, the security algorithm is a null algorithm.

In another possible implementation, before determining the third integrity security protection algorithm, the network device first selects the security algorithm, where the third integrity security protection algorithm is determined based on the security algorithm. For a manner of determining the third integrity security protection algorithm based on the security algorithm, refer to the foregoing manner of determining the first integrity security protection algorithm based on the security algorithm. Details are not described herein again.

S940: The terminal device checks the security mode command message.

For example, in this embodiment, for a manner in which the terminal device checks the security mode command message based on the third integrity security protection algorithm, refer to a manner in which the terminal device performs integrity check in the conventional technology.

For example, if the network device is an AMF, for a manner in which the terminal device checks the security mode command message, refer to the descriptions in which the UE checks the NAS SMC message in step S350 in the communication method shown in FIG. 3. Details are not described herein again.

For another example, if the network device is an access network device, for a manner in which the terminal device checks the security mode command message, refer to the descriptions in which the UE checks the AS SMC message in step S450 in the communication method shown in FIG. 4. Details are not described herein again.

Optionally, after the check is completed, the terminal device deletes or does not store the third integrity security protection algorithm.

When the security check in step S940 succeeds, the terminal device determines the security algorithm based on the second indication information and the identifier of the third integrity security protection algorithm. Further, the terminal device stores the security algorithm as a part of a security context. Therefore, the method procedure shown in FIG. 8 may further include the following steps.

S950: The terminal device determines the security algorithm.

For example, when the second indication information indicates that confidentiality and integrity security protection are performed, based on the security algorithm, on the message transmitted after the security mode command message, the terminal device determines the security algorithm based on the third integrity security protection algorithm. For a manner of determining the security algorithm by the terminal device based on the third integrity security protection algorithm, refer to the foregoing descriptions of determining the security algorithm by the network device based on the third integrity security protection algorithm. Details are not described herein again.

For example, the security mode command message is an AS SMC message, and an RRC message and a UP message share a security protection algorithm (for example, share a security algorithm). After completing check based on the third integrity security protection algorithm, the terminal device stores the security algorithm in an RRC security context and a UP security context, and deletes or does not store the third integrity security protection algorithm.

For another example, the security mode command message is an AS SMC message, and security protection algorithms of an RRC message and a UP message are independent. After completing check based on the third integrity security protection algorithm, the terminal device stores the security algorithm in an RRC security context, deletes or does not store the third integrity security protection algorithm, and stores the security protection algorithm corresponding to the UP message (for example, stores at least one of an authenticated encryption algorithm #1, an integrity security protection algorithm #1, or a confidentiality security protection algorithm #1 corresponding to the UP message) in a UP security context.

For still another example, the security mode command message is a NAS SMC message. After completing check based on the third integrity security protection algorithm, the terminal device stores the security algorithm in a NAS security context, and deletes or does not store the third integrity security protection algorithm.

For example, after the terminal device determines the security algorithm, the terminal device may activate integrity security protection and confidentiality security protection of the uplink message based on the security algorithm. The uplink message includes a message sent to the network device, and security protection of the uplink message based on the security algorithm includes performing confidentiality security protection and integrity security protection on the to-be-sent uplink message based on the security algorithm.

S960: The terminal device sends a security mode response message to the network device.

The foregoing uplink message includes the security mode response message. For related descriptions of sending the security mode response message by the terminal device to the network device in this embodiment, refer to the descriptions of sending the security mode response message by the terminal device to the network device in the communication method shown in FIG. 6. Details are not described herein again.

For example, the network device receives the security mode response message, and the network device performs integrity check and decryption on an information element in the security mode response message based on the security algorithm.

S970: The network device checks the security mode response message.

For a specific security check manner, refer to the manner in which the network device performs integrity check and decryption on the uplink message in step S540. Details are not described herein again.

As described above, in this embodiment, the network device may activate security protection of the uplink message after sending the security mode command message. In addition, in this embodiment, the network device may activate security protection of the uplink message after receiving the security mode response message. For example, when receiving a security mode complete message of the terminal device, the network device may activate security protection of the uplink message based on the security algorithm. The uplink message includes a message (for example, the security mode response message) received from the terminal device, and security protection of the uplink message based on the security algorithm includes performing decryption and integrity check on the received uplink message based on the security algorithm.

It should be understood that sequence numbers of the foregoing processes do not mean execution sequences. The execution sequence of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined to form a new embodiment based on an internal logical relationship thereof.

It should be further understood that, in some of the foregoing embodiments, a device (for example, a network device or a terminal device) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, a network device or a terminal device) may also be implemented by a component (for example, a chip or a circuit) of the device.

The communication methods provided in embodiments of this application are described in detail above with reference to FIG. 3 to FIG. 6. The communication methods are mainly described from a perspective of interaction between the network device and the terminal device. It may be understood that, to implement the foregoing functions, the network device and the terminal device include corresponding hardware structures and/or software modules for implementing the functions.

A person skilled in the art may be aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit device or a receive device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used. An example in which each functional module is obtained through division based on each corresponding function is used below for description.

FIG. 10 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, for the apparatus to implement an action of the device in the foregoing method embodiments.

In a design, the apparatus 10 may correspond to the network device in the foregoing method embodiments or a component (for example, a chip) of the network device.

The apparatus 10 may implement corresponding steps or procedures performed by the network device in the foregoing method embodiment. The transceiver module 11 may be configured to perform receiving and sending related operations of the network device in the foregoing method embodiment, and the processing module 12 may be configured to perform a processing related operation of the network device in the foregoing method embodiment.

In a possible implementation, the processing module 12 is configured to: determine a security algorithm, where the security algorithm includes a part for confidentiality protection and a part for integrity protection; and activate security protection between the network device and a terminal device based on the security algorithm and a security key, where the security key is a key shared between the terminal device and the network device. The transceiver module 11 is configured to receive an uplink message from the terminal device. The processing module 12 is configured to perform integrity verification on the uplink message by using the security key as an input key of the part for integrity protection in the security algorithm, and decrypt the uplink message by using the security key as an input key of the part for confidentiality protection in the security algorithm.

When the apparatus 10 is configured to perform the method in FIG. 5, the transceiver module 11 may be configured to perform steps of receiving and sending information in the method, for example, step S530; and the processing module 12 may be configured to perform a processing step in the method, for example, steps S510, S520, and S540.

When the apparatus 10 is configured to perform the method in FIG. 6, the transceiver module 11 may be configured to perform steps of receiving and sending information in the method, for example, steps S630 and S650; and the processing module 12 may be configured to perform a processing step in the method, for example, steps S610, S620, and S660.

When the apparatus 10 is configured to perform the method in FIG. 7, the transceiver module 11 may be configured to perform steps of receiving and sending information in the method, for example, steps S730 and S750; and the processing module 12 may be configured to perform a processing step in the method, for example, steps S710, S720, and S760.

When the apparatus 10 is configured to perform the method in FIG. 8, the transceiver module 11 may be configured to perform steps of receiving and sending information in the method, for example, steps S830 and S850; and the processing module 12 may be configured to perform a processing step in the method, for example, steps S810, S820, and S860.

When the apparatus 10 is configured to perform the method in FIG. 9, the transceiver module 11 may be configured to perform steps of receiving and sending information in the method, for example, steps S930 and S960; and the processing module 12 may be configured to perform a processing step in the method, for example, steps S910, S920, and S970.

It should be understood that specific processes in which the units perform the foregoing corresponding steps are described in detail in the foregoing method embodiments. For brevity, details are not described herein again.

In another design, the apparatus 10 may correspond to the terminal device in the foregoing method embodiment or a component (for example, a chip) of the terminal device.

The apparatus 10 may implement corresponding steps or procedures performed by the terminal device in the foregoing method embodiment. The transceiver module 11 may be configured to perform receiving and sending related operations of the terminal device in the foregoing method embodiment, and the processing module 12 may be configured to perform a processing related operation of terminal device in the foregoing method embodiment.

In a possible implementation, the processing module 12 is configured to: determine a security algorithm, where the security algorithm includes a part for confidentiality protection and a part for integrity protection; activate security protection between the terminal device and a network device based on the security algorithm and a security key, where the security key is a key shared between the terminal device and the network device; and perform security protection on a to-be-sent uplink message based on the security algorithm and the security key, and send a security-protected uplink message to the network device, where performing security protection on the to-be-sent uplink message based on the security algorithm and the security key includes: performing integrity protection on the to-be-sent uplink message by using the security key as an input key of the part for integrity protection in the security algorithm, and performing confidentiality protection on the to-be-sent uplink message by using the security key as an input key of the part for confidentiality protection in the security algorithm. The transceiver module 11 is configured to send the uplink message to the network device.

When the apparatus 10 is configured to perform the method in FIG. 5, the transceiver module 11 may be configured to perform steps of receiving and sending information in the method, for example, step S530; and the processing module 12 may be configured to perform a processing step in the method, for example, step S521.

When the apparatus 10 is configured to perform the method in FIG. 6, the transceiver module 11 may be configured to perform steps of receiving and sending information in the method, for example, steps S630 and S650; and the processing module 12 may be configured to perform a processing step in the method, for example, step S640.

When the apparatus 10 is configured to perform the method in FIG. 7, the transceiver module 11 may be configured to perform steps of receiving and sending information in the method, for example, steps S730 and S750; and the processing module 12 may be configured to perform a processing step in the method, for example, step S740.

When the apparatus 10 is configured to perform the method in FIG. 8, the transceiver module 11 may be configured to perform steps of receiving and sending information in the method, for example, steps S830 and S850; and the processing module 12 may be configured to perform a processing step in the method, for example, steps S841 and S840.

When the apparatus 10 is configured to perform the method in FIG. 9, the transceiver module 11 may be configured to perform steps of receiving and sending information in the method, for example, steps S930 and S960; and the processing module 12 may be configured to perform a processing step in the method, for example, steps S940 and S950.

It should be understood that specific processes in which the units perform the foregoing corresponding steps are described in detail in the foregoing method embodiments. For brevity, details are not described herein again.

It should be further understood that the apparatus 10 herein is embodied in a form of a functional module. A term "module" herein may be an application-specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has functions of implementing corresponding steps performed by a device (for example, the terminal device or the network device) in the foregoing methods. The functions may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in method embodiments.

In addition, the transceiver module 11 may alternatively be a transceiver circuit (for example, may include a receiving circuit and a sending circuit), and the processing module may be a processing circuit.

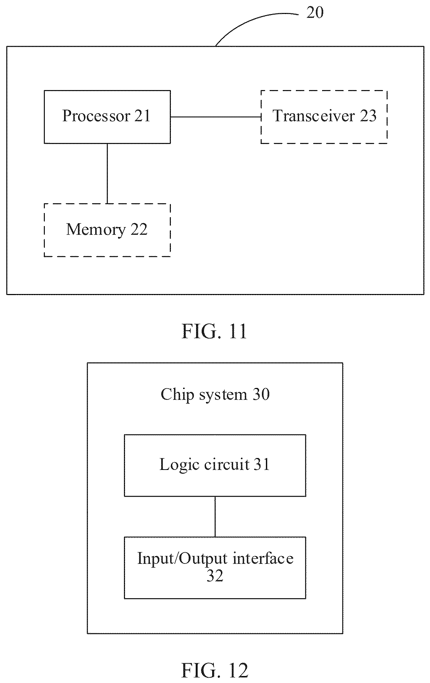

FIG. 11 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 11, the apparatus 20 further includes the memory 22, and the memory 22 is configured to store the computer program or instructions and/or data. The memory 22 and the processor 21 may be integrated, or may be disposed separately. Optionally, there are one or more memories 22.

Optionally, as shown in FIG. 11, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the network device in the foregoing method embodiments.

In another solution, the apparatus 20 is configured to implement operations performed by the terminal device in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

FIG. 12 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the network device and the terminal device in the foregoing method embodiments.

For example, the logic circuit 31 is configured to implement processing related operations performed by the network device and the terminal device in the foregoing method embodiments; and the input/output interface 32 is configured to implement sending and/or receiving related operations performed by the network device and the terminal device in the foregoing method embodiments.

An embodiment of this application further provides a computer-readable storage medium. The computer-readable storage medium stores computer instructions used to implement the methods performed by the network device or the terminal device in the foregoing method embodiments.

For example, when the computer program is executed by a computer, the computer is enabled to implement the methods performed by the network device or the terminal device in the foregoing method embodiments.

An embodiment of this application further provides a computer program product, including instructions. The instructions are executed by a computer to implement the methods performed by the network device and the terminal device in the foregoing method embodiments.

An embodiment of this application further provides a communication system, including the foregoing network device and terminal device.

For interpretations and beneficial effects of the related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a network device or a chip in the network device, wherein the method comprises:
determining a security algorithm, wherein the security algorithm comprises a part for confidentiality protection and a part for integrity protection;
activating security protection between the network device and a terminal device based on the security algorithm and a security key, wherein the security key is a key shared between the terminal device and the network device; and
receiving a security-protected uplink message from the terminal device, performing integrity verification on the security-protected uplink message by using the security key as an input key of the part for integrity protection in the security algorithm, and decrypting the security-protected uplink message by using the security key as an input key of the part for confidentiality protection in the security algorithm.

2. The method according to claim 1, wherein after activating security protection between the network device and the terminal device based on the security algorithm and the security key, the method further comprises:
performing security protection on a to-be-sent security mode command message based on the security algorithm, wherein the to-be-sent security mode command message comprises a first parameter and a second parameter; and
sending a security-protected security mode command message to the terminal device, wherein the security-protected security mode command message comprises first ciphertext, first message authentication code MAC, and the first parameter, wherein
the first ciphertext is obtained by performing confidentiality protection on the second parameter based on the security algorithm, and the first MAC is obtained by performing integrity protection calculation on the first parameter and the first ciphertext based on the security algorithm.

3. The method according to claim 2, wherein the first parameter comprises at least one of the following:
an identifier of the security algorithm, replayed terminal device security capability information, a key identifier of a first key, or change indication information of the first key, wherein the first key is used to determine the security key.

4. The method according to claim 2 or 3, wherein the security-protected security mode command message further comprises first indication information, and the first indication information indicates a length of the first parameter and/or indicates a location of the first parameter in the security-protected security mode command message.

5. The method according to any one of claims 2 to 4, wherein the security-protected security mode command message comprises a first packet header type indication, and the first packet header type indication indicates that security protection is performed on the security-protected security mode command message based on the security algorithm.

6. The method according to claim 1, wherein after activating security protection between the network device and the terminal device based on the security algorithm and the security key, the method further comprises:
performing integrity protection on a to-be-sent security mode command message by using the security key as an input key of the part for integrity protection; and
sending an integrity-protected security mode command message to the terminal device, wherein the integrity-protected security mode command message comprises an identifier of the security algorithm.

7. The method according to claim 1, wherein after determining the security algorithm, the method further comprises:
determining a first integrity security protection algorithm based on the security algorithm;
performing integrity protection on a to-be-sent security mode command message based on the first integrity security protection algorithm; and
sending an integrity-protected security mode command message to the terminal device, wherein the integrity-protected security mode command message comprises an identifier of the security algorithm.

8. The method according to claim 7, wherein performing integrity protection on the to-be-sent security mode command message based on the first integrity security protection algorithm comprises:
performing integrity protection on the to-be-sent security mode command message by using the security key as an input key of the first integrity security protection algorithm.

9. The method according to claim 7 or 8, wherein determining the first integrity security protection algorithm based on the security algorithm comprises:
determining, as the first integrity security protection algorithm, an algorithm obtained by setting the part for confidentiality protection in the security algorithm to null; or
determining the first integrity security protection algorithm based on the security algorithm and a correspondence between the security algorithm and the first integrity security protection algorithm.

10. The method according to claim 9, wherein if the security algorithm is an SNOW-AEAD algorithm, the first integrity security protection algorithm is an SNOW integrity security protection algorithm; or
if the security algorithm is a ZUC-AEAD algorithm, the first integrity security protection algorithm is a ZUC integrity security protection algorithm; or
if the security algorithm is an AES-AEAD algorithm, the first integrity security protection algorithm is an AES integrity security protection algorithm.

11. The method according to claim 1, wherein the method further comprises:
determining a second integrity security protection algorithm, and performing integrity protection on a to-be-sent security mode command message based on the second integrity security protection algorithm; and
sending an integrity-protected security mode command message to the terminal device, wherein the integrity-protected security mode command message comprises an identifier of the security algorithm and an identifier of the second integrity security protection algorithm.

12. The method according to claim 1, wherein the method further comprises:
determining a third integrity security protection algorithm, and performing security protection on a to-be-sent security mode command message based on the third integrity security protection algorithm; and
sending an integrity-protected security mode command message to the terminal device, wherein the integrity-protected security mode command message comprises an identifier of the third integrity security protection algorithm and second indication information, and the second indication information indicates that security protection is performed, based on the security algorithm, on a message transmitted after the security mode command message.

13. The method according to claim 12, wherein determining the security algorithm comprises:
determining the security algorithm based on the third integrity security protection algorithm and a correspondence between the third integrity security protection algorithm and the security algorithm.

14. The method according to any one of claims 1 to 12, wherein determining the security algorithm comprises:
selecting the security algorithm based on a priority of at least one security algorithm, wherein the security algorithm is one of the at least one security algorithm.

15. The method according to any one of claims 1 to 14, wherein the security algorithm is an authenticated encryption with associated data AEAD algorithm.

16. The method according to any one of claims 1 to 15, wherein the security-protected uplink message comprises a security mode response message.

17. The method according to any one of claims 1 to 16, wherein a header of the security-protected uplink message comprises a second packet header type indication, and the second packet header type indication indicates that security protection is performed on the security-protected uplink message based on the security algorithm.

18. A communication method, applied to a terminal device or a chip in the terminal device, wherein the method comprises:
determining a security algorithm, wherein the security algorithm comprises a part for confidentiality protection and a part for integrity protection;
activating security protection between the terminal device and a network device based on the security algorithm and a security key, wherein the security key is a key shared between the terminal device and the network device; and
performing security protection on a to-be-sent uplink message based on the security algorithm and the security key, and sending a security-protected uplink message to the network device, wherein performing security protection on the to-be-sent uplink message based on the security algorithm and the security key comprises:
performing integrity protection on the to-be-sent uplink message by using the security key as an input key of the part for integrity protection in the security algorithm, and encrypting the to-be-sent uplink message by using the security key as an input key of the part for confidentiality protection in the security algorithm.

19. The method according to claim 18, wherein the method further comprises:
receiving a security-protected security mode command message from the network device, wherein the security-protected security mode command message is used to activate security protection between the terminal device and the network device, wherein
the security-protected security mode command message comprises first ciphertext, first message authentication code MAC, and a first parameter;
determining the security algorithm comprises: determining the security algorithm and the security key based on the first parameter; and
the method further comprises: using the security key as the input key of the part for integrity protection in the security algorithm, performing calculation by using the first ciphertext and the first parameter as input parameters of the part for integrity protection in the security algorithm, to obtain MAC, and performing integrity verification on the security-protected security mode command message based on the first MAC and the MAC obtained through the calculation; and
if the integrity verification succeeds, decrypting the first ciphertext by using the security key as the input key of the part for confidentiality protection in the security algorithm, to obtain a second parameter.

20. The method according to claim 19, wherein the first parameter comprises at least one of the following:
an identifier of the security algorithm, replayed terminal device security capability information, a key identifier of a first key, or change indication information of the first key, wherein the first key is used to determine the security key.

21. The method according to claim 19 or 20, wherein the security-protected security mode command message further comprises first indication information, and the first indication information indicates a length of the first parameter and/or indicates a location of the first parameter in the security-protected security mode command message; and
the method further comprises:
determining the first parameter based on the first indication information.

22. The method according to any one of claims 19 to 21, wherein the security-protected security mode command message comprises a first packet header type indication, and the first packet header type indication indicates that security protection is performed on the security-protected security mode command message based on the security algorithm.

23. The method according to claim 18, wherein determining the security algorithm comprises:
receiving an integrity-protected security mode command message from the network device, wherein the integrity-protected security mode command message comprises an identifier of the security algorithm; and
determining the security algorithm based on the identifier of the security algorithm; and
the method further comprises:
performing integrity verification on the integrity-protected security mode command message by using the security key as the input key of the part for integrity protection in the security algorithm.

24. The method according to claim 18, wherein determining the security algorithm comprises:
receiving an integrity-protected security mode command message from the network device, wherein the integrity-protected security mode command message comprises an identifier of the security algorithm; and
determining the security algorithm based on the identifier of the security algorithm; and
the method further comprises:
determining a first integrity security protection algorithm based on the security algorithm; and
performing integrity verification on the integrity-protected security mode command message based on the first integrity security protection algorithm.

25. The method according to claim 24, wherein performing integrity verification on the integrity-protected security mode command message based on the first integrity security protection algorithm comprises:
performing integrity verification on the integrity-protected security mode command message by using the security key as an input key of the first integrity security protection algorithm.

26. The method according to claim 24 or 25, wherein determining the first integrity security protection algorithm based on the security algorithm comprises:
determining, as the first integrity security protection algorithm, an algorithm obtained by setting the part for confidentiality protection in the security algorithm to null; or
determining the first integrity security protection algorithm based on the security algorithm and a correspondence between the security algorithm and the first integrity security protection algorithm.

27. The method according to claim 26, wherein if the security algorithm is an SNOW-AEAD algorithm, the first integrity security protection algorithm is an SNOW integrity security protection algorithm; or if the security algorithm is a ZUC-AEAD algorithm, the first integrity security protection algorithm is a ZUC integrity security protection algorithm; or if the security algorithm is an AES-AEAD algorithm, the first integrity security protection algorithm is an AES integrity security protection algorithm.

28. The method according to claim 18, wherein determining the security algorithm comprises:
receiving an integrity-protected security mode command message from the network device, wherein the integrity-protected security mode command message comprises an identifier of the security algorithm and an identifier of the second integrity security protection algorithm; and
performing integrity verification on the integrity-protected security mode command message based on the second integrity security protection algorithm, and determining the security algorithm based on the identifier of the security algorithm.

29. The method according to claim 18, wherein determining the security algorithm comprises:
receiving an integrity-protected security mode command message from the network device, wherein the integrity-protected security mode command message comprises an identifier of the third integrity security protection algorithm and second indication information, and the second indication information indicates that security protection is performed, based on the security algorithm, on a message transmitted after the security mode command message; and
performing integrity verification on the integrity-protected security mode command message based on the third integrity security protection algorithm, and determining the security algorithm based on the third integrity security protection algorithm.

30. The method according to any one of claims 18 to 29, wherein the security algorithm is an authenticated encryption with associated data AEAD algorithm.

31. The method according to any one of claims 18 to 30, wherein the security-protected uplink message comprises a security mode response message.

32. The method according to any one of claims 18 to 31, wherein a header of the security-protected uplink message comprises a second packet header type indication, and the second packet header type indication indicates that security protection is performed on the security-protected uplink message based on the security algorithm.

33. A communication apparatus, comprising one or more functional modules configured to perform the method according to any one of claims 1 to 17, or one or more functional modules configured to perform the method according to any one of claims 18 to 32.

34. A communication apparatus, comprising:
a processor, configured to execute a computer program stored in a memory, to enable the apparatus to perform the method according to any one of claims 1 to 17, or enable the apparatus to perform the method according to any one of claims 18 to 32.

35. A computer program product, wherein the computer program product comprises instructions for performing the method according to any one of claims 1 to 32.

36. A computer-readable storage medium, wherein the computer-readable storage medium stores a computer program, and when the computer program is run on a computer, the computer is enabled to perform the method according to any one of claims 1 to 32.

37. A chip, wherein the chip is installed in a communication apparatus, the chip comprises a processor and a communication interface, and when the processor reads instructions through the communication interface and runs the instructions, the communication apparatus is enabled to perform the method according to any one of claims 1 to 32.

38. A system, comprising a network device and a terminal device, wherein the network device is configured to perform the method according to any one of claims 1 to 17, and the terminal device is configured to perform the method according to any one of claims 18 to 32.
